# EUROPEAN PATENT SPECIFICATION

(11) **EP 2 885 328 B1**
(45) Date of publication and mention of the grant of the patent: **15.05.2019**
(21) Application number: 13710725.6
(22) Date of filing: 05.03.2013
(51) Int. Cl.: C08F 220/18, C08F 222/10, C10M 145/14, C08F 297/00

(54) **LOOSE CORE STAR POLYMERS AND LUBRICATING COMPOSITION THEREOF**
STERNFÖRMIGE POLYMERE MIT LOSEM KERN UND SCHMIERMITTELZUSAMMENSETZUNG DARAUS
POLYMÈRES EN ÉTOILE À NOYAU LIBRE ET COMPOSITION LUBRIFIANTE À BASE DE CEUX-CI

(30) Priority: 20.08.2012 US 201261684880 P
(43) Date of publication of application: 24.06.2015
(73) Proprietor: The Lubrizol Corporation, Wickliffe, OH 44092-2298 (US)
(72) Inventor: JOHNSON, John R., Wickliffe, Ohio 44092-2298 (US); SCHOBER, Barton J., Wickliffe, Ohio 44092-2298 (US)
(74) Representative: D Young & Co LLP
(86) International application number: PCT/US2013/029008
(87) International publication number: WO 2014/031154

(56) References cited:
- WO-A1-96/23012
- WO-A1-2012/030616

## Description

### FIELD OF INVENTION

The present invention according to claims 1 to 20 relates to star polymer having a core made up of a crosslinked network of polymers derived from a mixture of one or more multi-functional monomers and one or more mono-functional monomers and where the star polymer has arms made of polymers derived from a mixture of one or more mono-functional monomers, where the star contains an average of at least three arms bonded to the core. The invention further relates to lubricating compositions containing an oil of lubricating viscosity and the described star polymers as well as methods of lubricating a mechanical device with the described lubricating compositions.

### BACKGROUND OF THE INVENTION

Viscosity modifiers including star polymers are known in the field of lubricants for providing viscosity index performance, low temperature performance as described by Brookfield viscosity and higher temperature performance as indicated by kinematic viscosity performance at 40°C and 100°C. The viscosity modifiers performance has been observed in a wide variety of mechanical devices including hydraulic systems, driveline systems and internal combustion engines. The star polymers are described in detail in a number of patent applications.

WO 04/087850 and WO 07/025837 disclose lubricating composition containing block copolymers prepared from RAFT (Reversible Addition Fragmentation Transfer) or ATRP (Atom Transfer Radical Polymerisation) polymerisation processes.

International Applications WO 06/047393, WO 06/047398, WO 07/127615 (US60/745422), WO 07/127660 (US60/745420), WO 07/127663 (US60/745417), and WO 07/127661 (US60/745425) all disclose RAFT polymers for lubricants. The RAFT polymers provide thickening to a lubricant.

International Applications WO2012/030616 and WO 96/23012 disclose star-branched polymers prepared from acrylic or methacrylic monomers. In particular in WO96/23012, the polymers have a core or nucleus derived from acrylate or methacrylate esters of polyols. Further, the polymers have molecular weights and other physical characteristics that make them useful for lubricating oil compositions. The star-branched polymers disclosed are prepared by anionic polymerisation techniques.

The star polymers of EP 979 834 require from 5 to 10 weight percent of a C₁₆₋₃₀ alkyl (meth)acrylate and from 5 to 15 weight percent of butyl methacrylate. A viscosity index improver with a C₁₆₋₃₀ alkyl (meth)acrylate monomer present at 5 weight percent or more has reduced low temperature viscosity performance because the polymer has a waxy texture.

US Patent 5,070,131 discloses gear oil compositions having improved shear stability index essentially consisting of gear oil, a viscosity index improver comprising a hydrogenated star polymer comprising at least four arms, the arms comprising, before hydrogenation, polymerized conjugated diolefin monomer units and the arms having a number average molecular weight within the range of 3,000 to 15,000.

There is a continued need for viscosity modifying additives that can provide improved viscosity index and/or low temperature properties. More efficient additives that can provide comparable performance to existing additives at lower overall treat rates, or similar advantages are highly desirable in the additive industry.

### SUMMARY OF THE INVENTION

The present invention according to claims 1 to 20 deals with a new class of star polymers that may be used as lubricant additives to provide improved performance in the lubricant in the area of viscosity index, fuel economy, low temperature viscometrics, oil-solubility, storage stability, shear stability, or some combination thereof. Improved performance may include not only better results and outcomes in direct testing and relative comparison to existing technologies and additives, but also comparable results and outcomes delivered by the present invention at lower overall treat rates. In other words, in some embodiments, the additives of the present invention may be more efficient than the existing technology, allowing a lubricant composition to obtain similar performance with a fraction of the amount of additive, representing a highly desirable advancement in the technology.

The invention relates to a polymer with a star architecture that is made up of a core bonded to at least three arms, or at least on average at least three arms. The core of the star polymer is a crosslinked network derived from a mixture of: (a) one or more multi-functional monomers; and (b) one or more mono-functional monomers. This core may also be described as a crosslinked network of polymers but it is understood that it is really a network formed from the mixture monomers, with polymer arms connected to and coming off of the network core. As used herein, the core may be described as a crosslinked network, a crosslinked network of reacted monomers, or a crosslinked network of polymers. The arms of the star polymer are polymer chains derived from: (i) one or more mono-functional monomers. The arms of the star polymer are derived from a polymer mixture comprising polymer arm precursors made from (i) one or more mono-functional monomers, wherein said precursors include at least one reactive end group In some embodiments the arms of the star polymer are polymers derived from: (i) one or more mono-functional monomers, (ii) a chain transfer agent, and (iii) an initiator.

In some embodiments the star polymers have a number average molecular weight of about 70,000 to 1,100,000. In some embodiments, the core of the star polymer has a number average molecular weight of about 8,000 to 50,000. In some embodiments, the arms of the star polymer have a number average molecular weights from about 4,000, 5,000, or even 8,000 up to 50,000. In some embodiments, the star polymers have from about 6 or 8 up to 22 arms.

The invention provides for the described star polymers where the multi-functional monomers of component (a) include an alkylene glycol dimethacrylate, a trialkylolalkane trimethacrylate, di-alkane diol dimethacrylate, or combinations thereof, where the alkyl, alkylol, alkylene, and alkane groups each independently contain from 1 to 20 carbon atoms.

The invention provides for the described star polymers where the multi-functional monomers of component (b) include alkyl methacrylate monomer where the alkyl group contains from 1 to 20 carbon atoms.

The invention provides for the described star polymers where the mono-functional monomers of component (i) include alkyl methacrylate monomer where the alkyl group contains from 1 to 20 carbon atoms.

The invention provides for the described star polymers where the chain transfer agent of component (ii) includes a trithiocarbonate that includes at least one group capable of forming a radical species that is suitable for initiating a radical polymerization

The invention provides for the described star polymers where the initiator of component (iii) comprises a peroxy initiator or an azo initiator, such as azobisisobutyronitrile (AIBN).

The invention further provides a lubricant composition that includes an oil of lubricating viscosity and any of the star polymers described herein.

The invention further provides a method of making a star polymer that includes the steps of (I) reacting at a temperature of 45°C or higher: (i) one or more mono-functional monomers; wherein the reaction of step I yields polymer arm precursors that will form the arms of said polymer star wherein said precursors include at least one reactive end group; and (II) reacting at a temperature of 45°C or higher: (a) one or more multi-functional monomers; (b) one or more mono-functional monomers; and (c) the reaction product of step I; wherein the reaction of step II yields a star polymer comprising a core bonded to at least three arms wherein the core of the star polymer comprises a crosslinked network of polymers derived from a mixture of monomers (a) and (b). The methods of making a star polymer described herein may be used to prepare any of the star polymers described herein.

In some embodiments, step (I) includes reacting at a temperature of 45°C or higher: (i) one or more mono-functional monomers, (ii) a chain transfer agent, and (iii) an initiator; wherein the reaction of step (I) yields polymer arm precursors that will form the arms of said polymer star wherein said precursors include at least one reactive end group.

The invention further provides a method of lubricating a mechanical device comprising supplying to the mechanical device any of the lubricating compositions described herein. The mechanical devices that can benefit from the use of the lubricating compositions described herein and the methods of lubrication include an internal combustion engine, a hydraulic device, a manual or automatic transmission, an industrial gear, an automotive gear (or axle), or a farm tractor.

The invention also provides for the use of any of the described star polymers in a lubricating composition to provide improved performance, and in some embodiments more efficient performance, in the lubricating composition in the area of viscosity index, fuel economy, low temperature viscometrics, oil-solubility, storage stability, or some combination thereof. In one embodiment, the star polymer provides acceptable oil-solubility and/or acceptable storage stability.

### DETAILED DESCRIPTION OF THE INVENTION

The present invention provides a lubricating composition, a method for lubricating as disclosed above, and a use of the star polymer as disclosed above.

### The Star Polymer

The star polymers of the present invention differ from those in the prior art at least because of the incorporation of one or more mono-functional monomers into the multi-functional monomers used in the crosslinking step that forms the core of the star polymer. The combination of mono-functional and multi-functional monomers results in a larger and less dense core, or in some embodiments what may be described as a less densely crosslinked core. All of these described embodiments are referred to herein as "loose" cores.

Star polymers of the present invention, having the loose core described above, provide significant improvements in coupling efficiency, which translates into improved viscosity modification and/or more efficient viscosity modification (same level of performance from a lower treat rate of additive), which is highly desirable.

In some embodiments, the loose core star polymers may also require significantly less cross linker and/or chain transfer agent in their preparation. The chain transfer agents are often the most expensive components used to prepare these materials so any decrease in the amounts required to prepare the star polymer can have a significant impact on the costs of the polymer, and so is highly desirable.

Another benefit of the loose core star polymers of the invention is that they, in some embodiments, can be made with a significantly lower amount of multi-functional monomer while still providing a star with the same number and size (molecular weight) arms, and so likely similar performance. The multi-functional monomer is another very expensive component used in the preparation of star polymers so any decrease in the amount of multi-functional monomer required to prepare the star polymer can have a significant impact on the costs of the polymer, and so is highly desirable.

The loose core star polymers of the invention are star polymers containing at least three arms. The core of the loose core star polymer is a crosslinked network derived from a mixture of monomers that includes (a) one or more multi-functional monomers, and (b) one or more mono-functional monomers. The arms of the loose core star polymer are derived from a polymer chain mixture comprising polymer arm precursors made from (i) one or more mono-functional monomers, wherein said precursors include at least one reactive end group. In some embodiments, the polymer arm precursors made from a mixture of (i) one or more mono-functional monomers, (ii) a chain transfer agent, and (iii) an initiator, wherein said precursors include at least one reactive end group.

The term "reactive end group" as used herein means a functional group located at or near the end of the described polymer arm precursors. These functional groups are capable of further reaction with other monomers or polymers and are sometimes referred to as "living". The specific types of end group typically vary from one method of polymerization to another, which are discussed in greater detail below. Examples of suitable end groups include dithiocarbonates (also known as xanthates), trithiocarbonates, halogens, nitroxides, etc. Any of the various methods of polymerization, and reactive end groups, may be used to produce the star polymers of the present invention, so long as the described polymer arm precursors can be prepared to have a reactive end group.

In some embodiments, the loose core star polymers can have a number average molecular weight from about 60,000 up to about 1,500,000 or from about 70,000, 100,000, or even 200,000 up to about 400,000, 750,000, or even 1,300,000. The loose core star polymers can have a number average molecular weight of at least about 70,000, 150,000, or even 250,000 and no more than about 1,500,000, 900,000, or even 350,000.

In some embodiments, the core of the loose core star polymers can have a number average molecular weight from about 5,000 up to about 200,000, or from about 6,000 up to about 150,000 or even from about 7,000 up to about 140,000. The core of the loose core star polymers can have a number average molecular weight of at least about 6,500, 10,000, or even 25,000 and no more than about 135,000, 100,000, or even 50,000.

In some embodiments, the arms of the loose core star polymers can have a number average molecular weight from about 5,000 up to about 100,000, or from about 7,000 up to 70,000 or even from about 8,000 up to about 50,000, where the molecular weight is in regards to each individual arm. The arms can have a number average molecular weight of at least about 7,500, 10,000 or even 20,000 and no more than about 55,000, 50,000 or even 40,000, where the molecular weight is in regards to each individual arm. In some embodiments, the loose core star polymers can have from about 8 up to about 22 arms.

It is understood that the molecular weight values and ranges provided herein are based on calculations using the amounts and ratios of the components used in the preparation of the star polymers of the invention.

As used herein terms such as "the star polymer has (or contains) monomers composed of' means the star polymer comprises units derived from the particular monomer referred to.

As used herein, the term "(meth)acryl" means acryl or methacryl.

As noted above, the star polymer of the invention may be prepared by a number of polymerisation processes known in the art, however in some embodiments the loose core star polymers of the invention are prepared by a free radical polymerisation such as anionic polymerisation, or a controlled free radical polymerisation such as RAFT (Reversible Addition Fragmentation Transfer), or ATRP (Atom Transfer Radical Polymerisation), or nitroxide-mediated polymerisation (NMP). In one embodiment, the star polymer may be obtained/obtainable from RAFT, ATRP or anionic polymerisation processes. In one embodiment, the star polymer may be obtained/obtainable from RAFT or ATRP polymerisation processes. In one embodiment, the loose core star polymer are obtained/obtainable from a RAFT polymerisation process.

More detailed descriptions of polymerisation mechanisms and related chemistry is discussed for nitroxide-mediated polymerisation (Chapter 10, pages 463 to 522), ATRP (Chapter 11, pages 523 to 628) and RAFT (Chapter 12, pages 629 to 690) in the Handbook of Radical Polymerization, edited by Krzysztof Matyjaszewski and Thomas P. Davis, 2002, published by John Wiley and Sons Inc. (hereinafter referred to as "Matyjaszewski et al.").

When the star polymer is derivable from a RAFT polymerisation, chain transfer agents are important. A more detailed review of suitable chain transfer agents is found in international publication WO 06/047393.

The discussion of the polymer mechanism of ATRP polymerisation is shown on page 524 in reaction scheme 11.1, page 566 reaction scheme 11.4, reaction scheme 11.7 on page 571, reaction scheme 11.8 on page 572 and reaction scheme 11.9 on page 575 of Matyjaszewski et al.

In ATRP polymerisation, groups that may be transferred by a radical mechanism include halogens (from a halogen-containing compound) or various ligands. A more detailed review of groups that may be transferred is described in US 6,391,996. Reagents and polymerisation conditions which may be suitable to prepare the star polymer of the present invention are also described in international publications WO 04/087850 and WO 07/025837.

Star polymers may generally be prepared by an arm-first process or core-first process. By arm-first it is meant that the mono-functional monomer derived units that make-up the arms, for example alkyl (meth)acrylate-derived units, are copolymerised before reacting the arms with the multi-functional monomer or similar material used to form the core, for example a polyol, a polyvalent unsaturated (meth)acrylic monomer, or mixtures thereof. This process results in a star by forming the arms first and then adding components to the end of the arms that react and crosslink to form the core. A core-first process means that the core is formed before co-polymerising the mono-functional monomer derived units, which are attached to and even grown off of the core. Both the arm-first process and the core-first process are known to a person skilled in the art. In some embodiments, the loose core star polymers of the present invention are formed by an arm-first process.

In some embodiments, the star polymers of the invention are made using RAFT polymerization methods, ATRP polymerization methods, or some combination thereof.

### The multi-functional monomers.

The cores of the loose core star polymers of the invention are prepared using a combination of multi-functional monomers and mono-functional monomers. Suitable multi-functional monomers include any of those suitable for use in the preparation of the cores of other star polymers.

Examples of suitable multi-functional monomers include polyvalent unsaturated (meth)acrylic monomers. Examples of the polyvalent unsaturated (meth)acrylic monomers include ethylene glycol diacrylate, ethylene glycol dimethacrylate, diethylene glycol diacrylate, diethylene glycol dimethacrylate, glycerol diacrylate, glycerol triacrylate, mannitol hexaacrylate, 4-cyclohexanediol diacrylate, 1,4-benzenediol di(meth)acrylate, neopentylglycol diacrylate, 1,3-propanediol diacrylate, 1,5-pentanediol di(meth)acrylate, bis-acrylates and bis-(meth)acrylates of polyethylene glycols of molecular weight 200-4000, polycaprolactonediol diacrylate, 1,1,1-trimethylolpropane diacrylate, 1,1,1-trimethylolpropane triacrylate, pentaerythritol diacrylate, pentaerythritol triacrylate, pentaerythritol tetraacrylate, triethylene glycol diacrylate, triethylene glycol di(meth)acrylate, 1,1,1-trimethylolpropane tri(meth)acrylate, hexamethylenediol diacrylate or hexamethylenediol di(meth)acrylate or an alkylene bis-(meth)acrylamide. Suitable monomers also include divinylbenzene and allyl methacrylate.

In some embodiments, the loose core star polymers may be prepared by condensing one or more polyvalent unsaturated (meth)acrylic monomers with a polyol. The polyol may contain 2 to 20, or 3 to 15, or 4 to 12 carbon atoms; and the number of hydroxyl groups present may be 2 to 10, or 2 to 4, or 2. Examples of polyols include ethylene glycol, poly (ethylene glycols), alkane diols such as 1,6-hexane diol or triols such as trimethylolpropane, oligomerised trimethylolpropanes such as Boltorn® materials sold by Perstorp Polyols. Examples of polyamines include polyalkylenepolyamines such as ethylenediamine, diethylenetriamine, triethylenetetramine, tetraethylenepentamine, pentaethylenehexamine and mixtures thereof.

In some embodiments, the multi-functional monomers of component (a) include an alkylene glycol dimethacrylate, a trialkylolalkane trimethacrylate, di-alkane diol dimethacrylate, or combinations thereof, where the alkyl, alkylol, alkylene, and alkane groups each independently contain from 1 to 20 carbon atoms. In still further embodiments, the multi-functional monomers of component (a) include ethylene glycol dimethacrylate, trimethylolpropane trimethacrylate, 1,6-hexanediol dimethacrylate, or some combination thereof. Suitable multifunctional monomers also include poly(ethylene glycol) dimethacrylate monomers.

In some embodiments, component (a) makes up 0.1 to 35 percent by weight of the star polymer.

### The mono-functional monomers.

The cores of the loose core star polymers of the invention are prepared using a combination of multi-functional monomers and mono-functional monomers. In addition, the arms of the loose core star polymers of the invention are prepared using mono-functional monomers. Suitable mono-functional monomers include any of those suitable for use in the preparation of the arms of other star polymers.

Examples of suitable mono-functional monomers include monomers derived from saturated alcohols that result in alkyl (meth)acrylate-derived units in the core and arms of the loose core star polymer. These alkyl (meth)acrylate-derived units may be monomers derived from saturated alcohols, such as methyl (meth)acrylate, ethyl (meth)acrylate, propyl (meth)acrylate, butyl (meth)acrylate, 2-methylpentyl (meth)acrylate, 2-propylheptyl (meth)acrylate, 2-butyloctyl (meth)acrylate, 2-ethylhexyl (meth)acrylate, octyl (meth)acrylate, nonyl (meth)acrylate, isooctyl (meth)acrylate, isononyl (meth)acrylate, 2-tert-butylheptyl (meth)acrylate, 3-isopropylheptyl (meth)-acrylate, decyl (meth)acrylate, undecyl (meth)acrylate, 5-methylundecyl (meth)acrylate, dodecyl (meth)acrylate, 2-methyldodecyl (meth)acrylate, tridecyl (meth)acrylate, 5-methyltridecyl (meth)acrylate, tetradecyl (meth)acrylate, pentadecyl (meth)acrylate, hexadecyl (meth)acrylate, 2-methylhexadecyl (meth)acrylate, heptadecyl (meth)acrylate, 5-isopropylheptadecyl (meth)acrylate, 4-tert-butyloctadecyl (meth)acrylate, 5-ethyloctadecyl (meth)acrylate, 3-isopropyloctadecyl-(meth)acrylate, octadecyl (meth)acrylate, nonadecyl (meth)acrylate, eicosyl (meth)acrylate, (meth)acrylates derived from unsaturated alcohols, such as oleyl (meth)acrylate; and cycloalkyl (meth)acrylates, such as 3-vinyl-2-butylcyclohexyl (meth)acrylate or bornyl

(meth)acrylate. Additional examples include styrene monomers such as vinyl aromatic styrene monomers, for example, alpha-methyl styrene, vinyl acetate monomers, fumarates, including for example maleic anhydride. Alpha olefins may also be used as mono-functional monomers, at least where the polymerization is using a controlled radical process.

The alkyl (meth)acrylates with long-chain alcohol-derived groups may be obtained, for example, by reaction of a (meth)acrylic acid (by direct esterification) or methyl (meth)acrylate (by transesterification) with long-chain fatty alcohols, in which reaction a mixture of esters such as (meth)acrylate with alcohol groups of various chain lengths is generally obtained. These fatty alcohols include Oxo Alcohol® 7911, Oxo Alcohol® 7900 and Oxo Alcohol® 1100 of Monsanto; Alphanol® 79 of ICI; Nafol® 1620, Alfol® 610 and Alfol® 810 of Condea (now Sasol); Epal® 610 and Epal® 810 of Ethyl Corporation; Linevol® 79, Linevol® 911 and Dobanol® 25 L of Shell AG; Lial® 125 of Condea Augusta, Milan; Dehydad® and Lorol® of Henkel KGaA (now Cognis) as well as Linopol® 7-11 and Acropol® 91 of Ugine Kuhlmann.

In some embodiments, the mono-functional monomers of component (b) and/or component (i) comprise an alkyl methacrylate monomer where the alkyl group contains from 1 to 20 carbon atoms. Also included are methacrylates with polyethylene glycol and polypropylene glycol present as the alkyl group. These monomers may be hydroxyl terminated or they may be alkyl ether terminated.

Suitable examples of mono-functional monomers include 2-ethylhexyl methacrylate, lauryl methacrylate, methyl methacrylate, butyl methacrylate, or any combination thereof. Lauryl methacrylate may include a C12-15 methacrylate, a C12/C14 methacrylate, or even, in some embodiments a C12 methacrylate. In some embodiments, the mono-functional monomer includes methyl methacrylate. In some embodiments, the arms of the loose core star polymers of the invention are mostly made up of units derived from 2-ethylhexyl methacrylate, lauryl methacrylate, methyl methacrylate, or any combination thereof. In still further embodiments, the arms of the loose core star polymers of the invention are mostly made up of units derived from lauryl methacrylate, or a C12-14 methacrylate. When saying "mostly made up of' here, it is meant that that the monomer-derived units composing the arms of the loose core star polymers are at least 70 mole percent, or from 70 to 80 mole percent, or at least 80 mole percent, or from 80 to 90 mole percent of the specified monomers.

In some embodiments, component (b) makes up 0.9 to 35 percent by weight of the star polymer, while component (i) makes up 30 to 99 percent by weight of the star polymer. It is understood that in some embodiments the mono-functional monomers of component (b) and component (i) will be the same, or include at least one common monomer, while in other embodiments the mono-functional monomers of component (b) and component (i) will be different monomers, or mixtures of monomers.

In some embodiments, the arms of the loose core star polymers of the invention are prepared using mono-functional monomers with a chain transfer agent, and an initiator. Suitable chain transfer agents include any of those suitable for use in the preparation of the arms of other star polymers.

In one embodiment, the process for preparing the crosslinked polymer further comprises at least one chain transfer agent in the preparation of the arms. A person skilled in the art will appreciate that specific classes of chain transfer agents are required for certain polymerisation techniques.

In one embodiment, the chain transfer agent is suitable for a RAFT polymerisation technique. A detailed description of suitable RAFT chain transfer agents is disclosed in US Patent Application 60/621745 filed on October 25, 2004, now WO 2006/047393 and US Patent Application 60/621875 filed on October 25, 2004, now WO 2006/047398.

Examples of a suitable RAFT chain transfer agent include benzyl 1-(2-pyrrolidinone)carbodithioate, benzyl (1,2-benzenedicarboximido) carbodithioate, 2-cyanoprop-2-yl 1-pyrrolecarbodithioate, 2-cyanobut-2-yl 1-pyrrolecarbodithioate, benzyl 1-imidazolecarbodithioate, N,N-dimethyl-S-(2-cyanoprop-2-yl)dithiocarbamate, N,N-diethyl-S-benzyl dithiocarbamate, cyanomethyl 1-(2-pyrrolidone) carbodithoate, cumyl dithiobenzoate, 2-dodecylsulfanylthiocarbonylsulfanyl-2-methyl-propionic acid butyl ester, O-phenyl-S-benzyl xanthate, N,N-diethyl S-(2-ethoxy-carbonylprop-2-yl)-dithiocarbamate, dithiobenzoic acid, 4-chlorodithiobenzoic acid, O-ethyl-S-(1-phenylethyl)xanthtate, O-ethyl-S-(2-(ethoxycarbonyl)prop-2-yl)xanthate, O-ethyl-S-(2-cyanoprop-2-yl)xanthate, O-ethyl-S-(2-cyanoprop-2-yl)xanthate, O-ethylS-cyanomethyl xanthate, O-pentafluorophenyl-S-benzyl xanthate, 3-benzylthio-5,5-dimethylcyclohex-2-ene-1-thione or benzyl 3,3-di(benzylthio)prop-2-enedithioate, S,S'-bis-(α,α'-disubstituted-α"-acetic acid)-trithiocarbonate, S,S'-bis-(α,α'-disubstituted-α"-acetic acid)-trithiocarbonate or S-alkyl-S'-(α,α'-disubstituted-α"-acetic acid)-trithiocarbonates, benzyl dithiobenzoate, 1-phenylethyl dithiobenzoate, 2-phenylprop-2-yl dithiobenzoate, 1-acetoxyethyl dithiobenzoate, hexakis(thiobenzoylthiomethyl)benzene, 1,4-bis(thiobenzoylthiomethyl)benzene, 1,2,4,5-tetrakis(thiobenzoylthiomethyl)benzene, 1,4-bis-(2-(thiobenzoylthio)prop-2-yl)-benzene, 1-(4-methoxyphenyl)ethyl dithiobenzoate, benzyl dithioacetate, ethoxycarbonylmethyl dithioacetate, 2-(ethoxycarbonyl)prop-2-yl dithiobenzoate, 2,4,4-trimethylpent-2-yl dithiobenzoate, 2-(4-chlorophenyl)prop-2-yl dithiobenzoate, 3-vinylbenzyl dithiobenzoate, 4-vinylbenzyl dithiobenzoate, S-benzyl diethoxyphosphinyldithioformate, tert-butyl trithioperbenzoate, 2-phenylprop-2-yl 4-chlorodithiobenzoate, 2-phenylprop-2-yl 1-dithionaphthalate, 4-cyanopentanoic acid dithiobenzoate, dibenzyl tetrathioterephthalate, dibenzyl trithiocarbonate, carboxymethyl dithiobenzoate or poly(ethylene oxide) with dithiobenzoate end group, di-dodecane ditrithiocarbonate, or mixtures thereof.

The amount of chain transfer agent present in the process in other embodiments includes from 0 or 0.1 up to 10, or from 0.5 to 2 weight percent based on the weight of monomer.

In some embodiments, the chain transfer agent of component (ii) comprises a trithiocarbonate that includes at least one group capable of forming a radical species that is suitable for initiating a radical polymerization.

In some embodiments, the arms of the loose core star polymers of the invention are prepared using mono-functional monomers with a chain transfer agent, and an initiator. Suitable initiators include any of those suitable for use in the preparation of the arms of other star polymers, and in some embodiments may be described as free radical initiators.

The free radical initiators useful in the invention are known and include peroxy compounds, peroxides, hydroperoxides, and azo compounds which decompose thermally to provide free radicals. Other suitable examples are described in J. Brandrup and E. H. Immergut, Editor, "Polymer Handbook", 2nd edition, John Wiley and Sons, New York (1975), pages II-1 to II-40.

Examples of a free radical initiator include those derived from a free radical-generating reagent and examples include benzoyl peroxide, t-butyl perbenzoate, t-butyl metachloroperbenzoate, t-butyl peroxide, sec-butylperoxydicarbonate, azobisisobutyronitrile, t-butyl peroxide, t-butyl hydroperoxide, t-amyl peroxide, cumyl peroxide, t-butyl peroctoate, t-butyl-m-chloroperbenzoate, azobisisovaleronitrile or mixtures thereof. In one embodiment, the free radical generating reagent may be at least one of t-butyl peroxide, t-butyl hydroperoxide, t-amyl peroxide, cumyl peroxide, t-butyl peroctoate, t-butyl-m-chloroperbenzoate, azobisisovaleronitrile or mixtures thereof. Commercially available free radical initiators include Trigonox™-21 from Ciba Specialty Chemicals.

The free radical initiator may be present in some embodiments from 0.01 to 10 or from 0.05 to 2 percent by weight, based on the total weight of the hydrocarbyl-substituted (meth)acrylic monomers.

In some embodiments, the initiator of component (iii) comprises a peroxy initiator or AIBN.

Overall, in some embodiments: component (a) makes up 0.1 to 35 percent by weight of the star polymer; component (b) makes up 0.9 to 35 percent by weight of the star polymer; component (i) makes up 30 to 99 percent by weight of the star polymer; component (ii) makes up from 0 to 10, from 0.01 to 10, from 0.5 to 2 percent by weight of the star polymer; and component (iii) makes up from 0.05 to 10 or from 0.01 to 2 percent by weight of the star polymer. These percentages and ranges are on an oil-free basis and do not include any diluent oil, solvent, or other materials that may be present in the reaction mixture used to prepare the star polymers or the resulting star polymer composition.

In some embodiments, the loose core star polymers of the invention have a core made up of the multi-functional monomers and the mono-functional monomers described above, wherein the weight ratio of multi-functional monomer to mono-functional monomer present in the core is from about 1:1 to about 1:5, or from about 1:2 to about 1:4, or from about 1:1.25 to about 1:3.5, or even about 1:2.5, about 1:3, about 1:3.5, or about 1:4. In some of these embodiments, the multi-functional monomer includes ethylene glycol dimethacrylate and the mono-functional monomer includes methyl methacrylate.

In some embodiments, the loose core star polymers of the invention contain 3 or more arms, about 5 or more, about 7 or more, about 10 or more, about 12 or more, or about 14 or more arms, for instance 3 to 100, or 4 to 50, or 6 to 30, or 8 to 14 arms. The star polymer may have 120 arms or less, or 80 arms or less, or 60 arms or less, where the number of arms may be considered as the average number of arms per star in a star polymer composition.

In some embodiments, the cores of the loose core star polymers of the invention are prepared by reacting the combination of the multi-functional monomers and the mono-functional monomers described above with the arms, in such amounts and ratios as to add on average from about 2 up to about 5, 8 or even 10, or from about 3 to about 4, or even about 3.0, 3.5, or 4.0 units of the multi-functional monomer to each arm, where the units of multi-functional monomer are separated, or spaced out, by one or more units of mono-functional monomers, so that when these end segments of the arms then cross-link to form the core, the core is a loose core, as described herein, made up of units derived from the multi-functional monomers and the mono-functional monomers described above. In some embodiments, the star polymers of the invention use the multi-functional monomers in such an amount that there are no more than 6 units derived from multi-functional monomer per arm of the resulting stars. In other embodiments, there are no more than 5, or even 4 units derived from multi-functional monomer per arm of the resulting stars. It is understood that these limits are in regards to the averaged properties of the stars in question, including the average number of arms per star and the average number of multi-functional monomer-derived units present in each arm and/or star. This feature of the invention in particular demonstrates its ability to reduce the need for multi-functional monomer, as more conventional stars often require a large average number of units derived from multi-functional monomer to get to higher averages of arms per star, while the present invention can obtain stars with the same high number of arms with only a fraction of the multi-functional monomer derived units.

### Additional Features.

In some embodiments, the loose core star polymers of the invention may be coupled. This may be accomplished by using a coupling agent capable of reacting with at least two stars, or even at least three stars, thus forming a coupled star polymer and even chains of coupled star polymers.

The amount of coupling agent may be an amount suitable to provide coupling of polymer previously prepared as arms onto a core comprising the coupling agent in monomeric, oligomeric, or polymeric form, to provide a star polymer. As described above, suitable amounts may be determined readily by the person skilled in the art with minimal experimentation, even though several variables may be involved. For example, if an excessive amount of coupling agent is employed, or if excessive unreacted monomer from the formation of the polymeric arms remains in the system, crosslinking rather than star formation may occur. Typically the mole ratio of polymer arms to coupling agent may be 50:1 to 1.5:1 (or 1:1), or 30:1 to 2:1, or 10:1 to 3:1, or 7:1 to 4:1, or 4:1 to 1:1. In other embodiments the mole ratio of coupling agent to polymer arms to may be 50:1 to 0.5:1, or 30:1 to 1:1, or 7:1 to 2:1. The desired ratio may also be adjusted to take into account the length of the arms, longer arms sometimes tolerating or requiring more coupling agent than shorter arms. Typically the material prepared is soluble in an oil of lubricating viscosity.

The overall composition containing the loose core star polymers of the invention may also have uncoupled polymeric arms present (also referred to as a polymer chain or linear polymer). The percentage conversion of a polymer chain to star polymer may be at least 10 %, or at least 20 %, or at least 40 %, or at least 55 %, for instance at least 70 %, at least 75 % or at least 80%. In one embodiment, the conversion of polymer chain to star polymer may be 90 %, 95 % or 100%. In one embodiment, a portion of the polymer chains does not form a star polymer and remains as a linear polymer. In one embodiment, the star polymer is in the form of a mixture with linear polymer chains (also referred to as uncoupled polymeric arms). In different embodiments, the amount of star polymer composition may be 10 wt % to 85 wt %, or 25 wt % to 70 wt % of the amount of polymer. In different embodiments, the linear polymer chains may be present at 15 wt % to 90 wt %, or 30 wt % to 75 wt % of the amount of polymer.

The monomers used in the preparation of the arms of the described star polymers may also include any additional co-monomers that will readily polymerize with the described mono-functional monomers described above. However, in other embodiments, the arms are made from the described mono-functional monomers and the monomer mixture is essentially free of any other monomers. In embodiments where additional monomers are present and end up in the structure of the arms that are formed, the content of these additional monomers may be from a minimum of 0.1 or 1 or even 5 percent by weight of all the monomers used in the preparation of the arms or of all the units present in the polymer chain of the arm, up to a maximum of 5, 10, 15, 20, 25 or even 30 percent by weight of all the monomers used in the preparation of the arms or of all the units present in the polymer chain of the arm. In some embodiments, the arms are made up of units derived from the described mono-functional monomers where said units make up at least 50, 75, 80, 85, 90, or even 95 percent (molar basis) of the arms.

In one embodiment, the loose core star polymers of the invention includes a dispersant unit derived from a unique monomer such as a nitrogen-containing compound or an oxygen-containing compound, or mixtures thereof. The dispersant unit may have a carbonyl group in combination with a basic nitrogen or hydroxy-group.

The oxygen-containing compound may include hydroxyalkyl (meth)acrylates such as 3-hydroxypropyl (meth)acrylate, 3,4-dihydroxybutyl (meth)acrylate, 2-hydroxyethyl (meth)acrylate, 2-hydroxypropyl (meth)acrylate, 2,5-dimethyl-1,6-hexanediol (meth)acrylate, 1,10-decanediol (meth)acrylate, carbonyl-containing (meth)acrylates such as 2-carboxyethyl (meth)acrylate, carboxymethyl (meth)acrylate, oxazolidinylethyl (meth)acrylate, N-(methacryloyloxy)formamide, acetonyl (meth)acrylate, N-methacryloylmorpholine, N-methacryloyl-2-pyrrolidinone, N-(2-methacryloyloxyethyl)-2-pyrrolidinone, N-(3-methacryloyloxypropyl)-2-pyrrolidinone, N-(2-methacryloyloxypentadecyl)-2-pyrrolidinone, N-(3-methacryloyloxyheptadecyl)-2-pyrrolidinone; glycol di(meth)acrylates such as 1,4-butanediol (meth)acrylate, 2-butoxyethyl (meth)acrylate, 2-ethoxyethoxymethyl (meth)acrylate, 2-ethoxyethyl (meth)acrylate, or mixtures thereof. Additional examples include styrene monomers such as vinyl aromatic styrene monomers, for example, alpha-methyl styrene.

Other examples of suitable non-carbonyl oxygen containing compounds capable of being incorporated into the copolymer include (meth)acrylates of ether alcohols, such as tetrahydrofurfuryl (meth)acrylate, vinyloxyethoxyethyl (meth)acrylate, methoxyethoxyethyl (meth)acrylate, 1-butoxypropyl (meth)acrylate, 1-methyl-(2-vinyloxy)ethyl (meth)acrylate, cyclohexyloxymethyl (meth)acrylate, methoxymethoxyethyl (meth)acrylate, benzyloxymethyl (meth)acrylate, furfuryl (meth)acrylate, 2-butoxyethyl (meth)acrylate, 2-ethoxyethoxymethyl (meth)acrylate, 2-ethoxyethyl (meth)acrylate, allyloxymethyl (meth)acrylate, 1-ethoxybutyl (meth)acrylate, methoxymethyl (meth)acrylate, 1-ethoxyethyl (meth)acrylate, ethoxymethyl (meth)acrylate and ethoxylated (meth)acrylates which typically have 1 to 20, or 2 to 8, ethoxy groups, or mixtures thereof.

The nitrogen-containing compound may include a vinyl-substituted nitrogen heterocyclic monomer, a dialkylaminoalkyl (meth)acrylate monomer, a dialkylaminoalkyl (meth)acrylamide monomer, a tertiary-alkyl(meth)acrylamide monomer or mixtures thereof. In one embodiment, the RAFT polymer is not further functionalised in the core or the polymeric arms with a nitrogen-containing monomer.

The nitrogen-containing compound may be a (meth)acrylamide or a nitrogen containing (meth)acrylate monomer that may be represented by the formula: 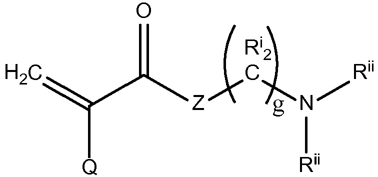 wherein Q may be hydrogen or methyl and, in one embodiment Q is methyl; Z may be an N-R group or O (oxygen) where R may be a hydrogen or a alkyl group containing from 1 to 4 carbon atoms; each Rⁱⁱ may independently be hydrogen or a hydrocarbyl group (typically alkyl) containing 1 to 8, or 1 to 4 carbon atoms; each Rⁱ may independently be hydrogen or a hydrocarbyl group (typically alkyl) containing 1 to 2 carbon atoms, and typically hydrogen; and g may be an integer from 1 to 6, or 1 to 3. In some embodiments, such compounds are not used in the polymerization.

Examples of a suitable nitrogen-containing compound include N,N-dimethylacrylamide; N-vinyl carbonamides (such as N-vinyl-formamide, N-vinylacetamide, N-vinyl propionamides, and N-vinyl hydroxy-acetamide), vinyl pyridine, N-vinyl imidazole, N-vinyl pyrrolidinone, N-vinyl caprolactam, dimethylaminoethyl acrylate (DMAEA), dimethylaminoethyl methacrylate (DMAEMA), dimethylaminobutyl acrylamide, dimethylaminopropyl methacrylate (DMAPMA), dimethylaminopropyl acrylamide, dimethylaminopropyl methacrylamide, dimethylaminoethyl acrylamide or mixtures thereof.

In some embodiments, the arms or cores of the described star polymers may also include units derived from methacrylic acids.

In addition, in some embodiments, where a CTA is used in the preparation of the star polymer, the CTA may fragment, for example under high temperature reaction conditions, and initiate the polymerization reaction without the need for a separate initiator. In such embodiments, the CTA would also be the initiator, or in the alternative, the initiator component could be excluded.

Generally, the loose core star polymers of the invention may be used in the lubricant compositions at ranges including from 0.01 to 60, or from 0.5 to 60, or from 1 to 20, or from 5 to 10, or from 0.5 to 5 percent by weight of the overall lubricating composition.

### Oils of Lubricating Viscosity

The lubricating composition comprises an oil of lubricating viscosity. Such oils include natural and synthetic oils, oil derived from hydrocracking, hydrogenation, and hydro-finishing, unrefined, refined, re-refined oils or mixtures thereof.

Unrefined oils are those obtained directly from a natural or synthetic source generally without (or with little) further purification treatment.

Refined oils are similar to the unrefined oils except they have been further treated in one or more purification steps to improve one or more properties. Purification techniques are known in the art and include solvent extraction, secondary distillation, acid or base extraction, filtration, percolation and the like.

Re-refined oils are also known as reclaimed or reprocessed oils, and are obtained by processes similar to those used to obtain refined oils and often are additionally processed by techniques directed to removal of spent additives and oil breakdown products.

Natural oils useful in making the inventive lubricants include animal oils, vegetable oils (e.g., castor oil), mineral lubricating oils such as liquid petroleum oils and solvent-treated or acid-treated mineral lubricating oils of the paraffinic, naphthenic or mixed paraffinic-naphthenic types and oils derived from coal or shale or mixtures thereof.

Synthetic lubricating oils are useful and include hydrocarbon oils such as polymerized, oligomerised, or interpolymerised olefins; poly(1-hexenes), poly(1-octenes), trimers or oligomers of 1-decene, e.g., poly(1-decenes), such materials being often referred to as poly α-olefins, and mixtures thereof; alkyl-benzenes (e.g. dodecylbenzenes, tetradecylbenzenes, dinonylbenzenes, di-(2-ethylhexyl)-benzenes); polyphenyls (e.g., biphenyls, terphenyls, alkylated polyphenyls); diphenyl alkanes, alkylated diphenyl alkanes, alkylated diphenyl ethers and alkylated diphenyl sulfides and the derivatives, analogues and homologs thereof or mixtures thereof.

Other synthetic lubricating oils include polyol esters (such as Prolube®3970), diesters, liquid esters of phosphorus-containing acids (e.g., tricresyl phosphate, trioctyl phosphate, and the diethyl ester of decane phosphonic acid), or polymeric tetrahydrofurans. Synthetic oils may be produced by Fischer-Tropsch reactions and typically may be hydroisomerised Fischer-Tropsch hydrocarbons or waxes. In one embodiment, oils may be prepared by a Fischer-Tropsch gas-to-liquid synthetic procedure as well as other gas-to-liquid oils.

Oils of lubricating viscosity may also be defined as specified in April 2008 version of "Appendix E - API Base Oil Interchangeability Guidelines for Passenger Car Motor Oils and Diesel Engine Oils", section 1.3 Sub-heading 1.3. "Base Stock Categories". In one embodiment, the oil of lubricating viscosity may be an API Group II or Group III oil. The oil of lubricating viscosity may also be an ester.

The amount of the oil of lubricating viscosity present is typically the balance remaining after subtracting from 100 percent by weight the sum of the amount of the compound of the invention and the other performance additives that may also be present.

The lubricating composition may be in the form of a concentrate and/or a fully formulated lubricant. If the star polymer of the present invention, is in the form of a concentrate (which may be combined with additional oil to form, in whole or in part, a finished lubricant), the ratio of the of components the star polymer of the present invention to the oil of lubricating viscosity and/or to diluent oil include the ranges of 1:99 to 99:1 by weight, or 80:20 to 10:90 by weight.

### Other Performance Additives

The composition of the invention optionally further includes at least one other performance additive. The other performance additives include metal deactivators, detergents, viscosity index improvers (that is, viscosity modifiers other than the star polymer of the present invention), extreme pressure agents (typically sulfur- and/or phosphorus-containing), antiwear agents, antioxidants (such as hindered phenols, aminic antioxidants (typically dinonyl diphenylamine, octyl diphenylamine, dioctyl diphenylamine), or molybdenum compounds), corrosion inhibitors, foam inhibitors, demulsifiers, pour point depressants, seal swelling agents, friction modifiers, and mixtures thereof.

The hindered phenol may include 2,6-di-tert-butylphenol, 4-methyl-2,6-di-tert-butylphenol, 4-ethyl-2,6-di-tert-butylphenol, 4-propyl-2,6-di-tert-butylphenol or 4-butyl-2,6-di-tert-butylphenol, or 4-dodecyl-2,6-di-tert-butylphenol. In one embodiment the hindered phenol antioxidant may be an ester and may include, e.g., Irganox™ L-135 from Ciba. A more detailed description of suitable ester-containing hindered phenol antioxidant chemistry is found in US Patent 6,559,105.

In one embodiment, the invention provides a lubricating composition further comprising at least one of a dispersant, an antiwear agent, a dispersant viscosity modifier, a friction modifier, a viscosity modifier, an antioxidant, an overbased detergent, an extreme pressure agent, or mixtures thereof. In one embodiment, the invention provides a lubricating composition further comprising at least one of a polyisobutylene succinimide dispersant, an antiwear agent, a dispersant viscosity modifier, a friction modifier, a viscosity modifier (typically an olefin copolymer such as an ethylene-propylene copolymer), an antioxidant (including phenolic and aminic antioxidants), an overbased detergent (including overbased sulfonates and phenates), an extreme pressure agent, or mixtures thereof.

In one embodiment, the invention provides a lubricating composition comprising the star polymer of the present invention, an overbased detergent, a dispersant, an antiwear agent (such as a metal dialkyldithiophosphate, in particular a zinc dialkyldithiophosphate, an amine phosphate, or a phosphite), and an oil of lubricating viscosity. Typically a lubricating composition of this type may be useful for an internal combustion engine or a manual transmission.

In one embodiment, the invention provides a lubricating composition comprising the star polymer of the present invention, an antiwear agent, a corrosion inhibitor, and an oil of lubricating viscosity. Typically a lubricating composition of this type may be useful for a hydraulic device.

In one embodiment, the invention provides a lubricating composition comprising the star polymer of the present invention, a phosphorus-containing acid, salt, or ester, an extreme pressure agent, other than a phosphorus-containing acid, salt, or ester, and an oil of lubricating viscosity. Optionally, the lubricating composition may also include a friction modifier, a detergent or a dispersant. Typically a lubricating composition of this type may be useful for an automatic transmission, a manual transmission, a gear or an axle.

In one embodiment, the invention provides a lubricating composition comprising the star polymer of the present invention, a phosphorus-containing acid, salt, or ester, a dispersant, and an oil of lubricating viscosity. Optionally, the lubricating composition may also include a friction modifier, a detergent or an inorganic phosphorus compound (such as phosphoric acid). Typically a lubricating composition of this type may be useful for an automatic transmission.

The overbased detergent includes phenates (including alkyl phenates and sulfur containing phenates), sulfonates, salixarates, carboxylates (such as salicylates), overbased phosphorus acids; alkyl phenols, overbased sulfur coupled alkyl phenol compounds, or saligenin detergents. In one embodiment, the overbased detergent comprises one or more of salixarates, phenates, sulfonates, or salicylates. In one embodiment, the overbased detergent may be a salicylate. In one embodiment, the overbased detergent may be a sulfonate. In one embodiment, the overbased detergent may be a phenate. In one embodiment, the overbased detergent may be a salixarate.

In one embodiment, the overbased detergent comprises mixtures of at least two substrates. When two or more detergent substrates are used, the overbased detergent formed may be described as a complex/hybrid. Typically the complex/hybrid may be prepared by reacting in the presence of the suspension and acidifying overbasing agent, alkyl aromatic sulfonic acid at least one alkyl phenol (such as, alkyl phenol, aldehyde-coupled alkyl phenol, sulfurized alkyl phenol) and optionally alkyl salicylic acid. A more detailed description of hybrid detergents is disclosed in WO97046643.

When the overbased detergent comprises at least one of a phenate, salixarate or salicylate detergent, the TBN on an oil-free basis may be 105 to 450, or from 110 to 400, or from 120 to 350. When the overbased detergent comprises an overbased sulfonate, the TBN may be 200 or more to 500, or 350 to 450. The overbased detergent is typically salted with an alkali or alkaline earth metal. The alkali metal includes lithium, potassium or sodium; and the alkaline earth metal includes calcium or magnesium. In one embodiment, the alkali metal is sodium. In one embodiment, the alkaline earth metal is calcium. In one embodiment, the alkaline earth metal is magnesium.

The detergent may be present at 0.1 wt % to 10 wt %, or 0.1 wt % to 8 wt %, or 1 wt % to 4 wt %, or greater than 4 to 8 wt %.

The dispersant may be a succinimide dispersant (for example N-substituted long chain alkenyl succinimides), a Mannich dispersant, an ester-containing dispersant, a condensation product of a long chain hydrocarbyl (such as a fatty hydrocarbyl or polyisobutylene) monocarboxylic acylating agent with an amine or ammonia, an alkyl amino phenol dispersant, a hydrocarbyl-amine dispersant, a polyether dispersant, or a polyetheramine dispersant.

The succinimide dispersant may be derived from an aliphatic polyamine, or mixtures thereof. The aliphatic polyamine may be aliphatic polyamine such as an ethylenepolyamine, a propylenepolyamine, a butylenepolyamine, or mixtures thereof. In one embodiment, the aliphatic polyamine may be ethylenepolyamine. In one embodiment the aliphatic polyamine may be selected from the group consisting of ethylenediamine, diethylenetriamine, triethylenetetramine, tetraethylenepentamine, pentaethylenehexamine, polyamine still bottoms, and mixtures thereof.

The dispersant may be an N-substituted long chain alkenyl succinimide. Examples of N-substituted long chain alkenyl succinimide include polyisobutylene succinimide. Typically the polyisobutylene from which polyisobutylene succinic anhydride is derived has a number average molecular weight of 350 to 5000, or 550 to 3000 or 750 to 2500. The long chain alkenyl succinimide may include polyisobutylene succinimide, wherein the polyisobutylene from which it is derived has a number average molecular weight in the range 350 to 5000, or 500 to 3000, or 750 to 1150. Succinimide dispersants and their preparation are disclosed, for instance, in US Patents 3,172,892, 3,219,666, 3,316,177, 3,340,281, 3,351,552, 3,381,022, 3,433,744, 3,444,170, 3,467,668, 3,501,405, 3,542,680, 3,576,743, 3,632,511, 4,234,435, Re 26,433, and 6,165,235, 7,238,650 and EP Patent Application 0 355 895 A.

In one embodiment, the dispersant for a driveline device may be a post treated dispersant. The dispersant may be post treated with dimercaptothiadiazole, optionally in the presence of one or more of a phosphorus compound, a dicarboxylic acid of an aromatic compound, and a borating agent.

In one embodiment, the post treated dispersant may be formed by heating an alkenyl succinimide or succinimide detergent with a phosphorus ester and water to partially hydrolyze the ester. The post treated dispersant of this type is disclosed for example in U.S. Patent 5,164,103.

In one embodiment, the post treated dispersant may be produced by preparing a mixture of a dispersant and a dimercaptothiadiazole and heating the mixture above about 100°C. The post treated dispersant of this type is disclosed for example in U.S. Patent 4,136,043.

In one embodiment, the dispersant may be post treated to form a product prepared comprising heating together: (i) a dispersant (typically a succinimide), (ii) 2,5-dimercapto-1,3,4-thiadiazole or a hydrocarbyl-substituted 2,5-dimercapto-1,3,4-thiadiazole, or oligomers thereof, (iii) a borating agent (similar to those described above); and (iv) optionally a dicarboxylic acid of an aromatic compound selected from the group consisting of 1,3 diacids and 1,4 diacids (typically terephthalic acid), or (v) optionally a phosphorus acid compound (including either phosphoric acid or phosphorous acid), said heating being sufficient to provide a product of (i), (ii), (iii) and optionally (iv) or optionally (v), which is soluble in an oil of lubricating viscosity. The post treated dispersant of this type is disclosed for example in International Application WO 2006/654726 A.

Examples of a suitable dimercaptothiadiazole include 2,5-dimercapto-1,3,4-thiadiazole or a hydrocarbyl-substituted 2,5-dimercapto-1,3,4-thiadiazole. In several embodiments, the number of carbon atoms on the hydrocarbyl-substituent group includes 1 to 30, 2 to 25, 4 to 20, or 6 to 16. Examples of suitable 2,5-bis(alkyl-dithio)-1,3,4-thiadiazoles include 2,5-bis(tert-octyldithio)-1,3,4-thiadiazole 2,5-bis(tert-nonyldithio)-1,3,4-thia-diazole, 2,5-bis(tert-decyldithio)-1,3,4-thiadiazole, 2,5-bis(tert-undecyl-dithio)-1,3,4-thiadiazole, 2,5-bis(tert-dodecyldithio)-1,3,4-thiadiazole, 2,5-bis(tert-tridecyldithio)-1,3,4-thiadiazole, 2,5-bis(tert-tetradecyldithio)-1 ,3,4-thia-diazole, 2,5-bis(tert-pentadecyldithio)-1,3,4-thiadiazole, 2,5-bis(tert-hexadecyl-dithio)-1,3,4-thiadiazole, 2,5-bis(tert-heptadecyldithio)-1,3,4-thiadiazole, 2,5-bis(tert-octadecyldithio)-1,3,4-thiadiazole, 2,5-bis(tert-nonadecyldithio)-1,3,4-thiadiazole or 2,5-bis(tert-eicosyldithio)-1,3,4-thiadiazole, or oligomers thereof.

The dispersant may be present at 0.01 to 20 or 0.1 to 15 or 0.1 to 10, or 1 to 6 percent by weight of the lubricating composition.

The antiwear agent includes (i) a non-ionic phosphorus compound; (ii) an amine salt of a phosphorus compound; (iii) an ammonium salt of a phosphorus compound; (iv) a monovalent metal salt of a phosphorus compound, such as a metal dialkyldithiophosphate or a metal dialkylphosphate; or (v) mixtures of (i), (ii), (iii) or (iv).

Examples of a suitable zinc dialkylphosphate (often referred to as ZDDP, ZDP or ZDTP) include zinc di-(2-methylpropyl) dithiophosphate, zinc di-(amyl) dithiophosphate, zinc di-(1,3-dimethylbutyl) dithiophosphate, zinc di-(heptyl) dithiophosphate, zinc di-(octyl) dithiophosphate di-(2-ethylhexyl) dithiophosphate, zinc di-(nonyl) dithiophosphate, zinc di-(decyl) dithiophosphate, zinc di-(dodecyl) dithiophosphate, zinc di-(dodecylphenyl) dithiophosphate, zinc di-(heptylphenyl) dithiophosphate, and especially mixtures thereof. Particularly suitable mixtures thereof include zinc dialkylphosphates derived from mixtures of amyl alcohol and 2-methylpropyl alcohol, zinc dialkylphosphates derived from mixtures of 4-methyl-2-pentanol and 1-methylethyl alcohol, zinc dialkylphosphates derived from mixtures of 2-ethylhexanol and iso-butanol, zinc dialkylphosphates derived from mixtures of 2-ethylhexanol and iso-propanol, and even mixtures thereof.

The amine salt of a phosphorus acid or ester includes phosphoric acid esters and amine salts thereof; dialkyldithiophosphoric acid esters and amine salts thereof; amine salts of phosphites; and amine salts of phosphorus-containing carboxylic esters, ethers, and amides; and mixtures thereof.

In one embodiment, the amine salt of a phosphorus compound is derived from an amine salt of a phosphorus compound, or mixtures thereof. In one embodiment, the amine salt of a phosphorus acid or ester includes a partial amine salt-partial metal salt compounds or mixtures thereof. In one embodiment, the amine salt of a phosphorus acid or ester further comprises a sulfur atom in the molecule.

The amines which may be suitable for use as the amine salt include primary amines, secondary amines, tertiary amines, and mixtures thereof. The amines include those with at least one hydrocarbyl group, or, in certain embodiments, two or three hydrocarbyl groups. The hydrocarbyl groups may contain about 2 to about 30 carbon atoms, or in other embodiments about 8 to about 26, or about 10 to about 20, or about 13 to about 19 carbon atoms.

Primary amines include ethylamine, propylamine, butylamine, 2-ethylhexylamine, octylamine, and dodecylamine, as well as such fatty amines as n-octylamine, n-decylamine, n-dodecylamine, n-tetradecylamine, n-hexadecylamine, n-octadecylamine, and oleylamine. Other useful fatty amines include commercially available fatty amines such as "Armeen®" amines (products available from Akzo Chemicals, Chicago, Illinois), such as Armeen C, Armeen O, Armeen OL, Armeen T, Armeen HT, Armeen S and Armeen SD, wherein the letter designation relates to the fatty group, such as coco, oleyl, tallow, or stearyl groups.

Examples of suitable secondary amines include dimethylamine, diethylamine, dipropylamine, dibutylamine, diamylamine, dihexylamine, diheptylamine, methylethylamine, ethylbutylamine, and ethylamylamine. The secondary amines may be cyclic amines such as piperidine, piperazine, and morpholine.

The amine may also be a tertiary-aliphatic primary amine. The aliphatic group in this case may be an alkyl group containing about 2 to about 30, or about 6 to about 26, or about 8 to about 24 carbon atoms. Tertiary alkyl amines include monoamines such as tert-butylamine, tert-hexylamine, 1-methyl-1-amino-cyclohexane, tert-octylamine, tert-decylamine, tert-dodecylamine, tert-tetradecylamine, tert-hexadecylamine, tert-octadecylamine, tert-tetracosanylamine, and tert-octacosanylamine.

In one embodiment, the amine salt of a phosphorus acid or ester includes an amine with C11 to C14 tertiary alkyl primary groups or mixtures thereof. In one embodiment, the amine salt of a phosphorus compound includes an amine with C14 to C18 tertiary alkyl primary amines or mixtures thereof. In one embodiment, the amine salt of a phosphorus compound includes an amine with C18 to C22 tertiary alkyl primary amines or mixtures thereof.

Mixtures of amines may also be used in the invention. In one embodiment, a useful mixture of amines is "Primene® 81R" and "Primene® JMT." Primene® 81R and Primene® JMT (both produced and sold by Rohm & Haas) are mixtures of C11 to C14 tertiary alkyl primary amines and C18 to C22 tertiary alkyl primary amines respectively.

In one embodiment, the amine salt of a phosphorus acid or ester is the reaction product of a C14 to C18 alkylated phosphoric acid with Primene 81R™ (produced and sold by Rohm & Haas) which is a mixture of C11 to C14 tertiary alkyl primary amines.

In one embodiment, a dithiophosphoric acid or phosphoric acid may be reacted with an epoxide or a glycol. This reaction product is further reacted with a phosphorus acid, anhydride, or lower ester (where "lower" signifies about 1 to about 8, or about 1 to about 6, or about 1 to about 4, or 1 to about 2 carbon atoms in the alcohol-derived portion of the ester). The epoxide includes an aliphatic epoxide or a styrene oxide. Examples of useful epoxides include ethylene oxide, propylene oxide, butene oxide, octene oxide, dodecene oxide, styrene oxide and the like. In one embodiment, the epoxide is propylene oxide. The glycols may be aliphatic glycols having 1 to about 12, or about 2 to about 6, or about 2 to about 3 carbon atoms. The dithiophosphoric acids, glycols, epoxides, inorganic phosphorus reagents and methods of reacting the same are described in U.S. Patent numbers 3,197,405 and 3,544,465. The resulting acids may then be salted with amines. An example of suitable dithiophosphoric acid derivative is prepared by adding phosphorus pentoxide (about 64 grams) at about 58°C over a period of about 45 minutes to about 514 grams of hydroxypropyl O,O-di(4-methyl-2-pentyl)phosphorodithioate (prepared by reacting di(4-methyl-2-pentyl)-phosphorodithioic acid with about 1.3 moles of propylene oxide at about 25°C). The mixture is heated at about 75°C for about 2.5 hours, mixed with a diatomaceous earth and filtered at about 70°C. The filtrate contains about 11.8% by weight phosphorus, about 15.2 percent by weight sulfur, and an acid number of 87 (bromophenol blue).

In one embodiment, the phosphorus-containing acid, salt or ester comprises a non-ionic phosphorus compound. Typically the non-ionic phosphorus compound may have an oxidation state of +3 or +5. The different embodiments comprise phosphite ester, phosphate esters, or mixtures thereof. A more detailed description of the non-ionic phosphorus compound include column 9, line 48 to column 11, line 8 of US 6,103,673.

The phosphorus-containing acid, salt or ester may be present in the lubricating composition at about 0.01 to about 20 or about 0.05 to about 10 or about 0.1 to about 5 percent by weight of the lubricating composition.

When the extreme pressure agent is other than a phosphorus-containing acid, salt, or ester, the extreme pressure agent may include a boron-containing compound, a sulfur-containing compound, or mixtures thereof. The extreme pressure agent may be present in the lubricating composition at about 0.01 to about 20 or about 0.05 to about 10, or about 0.1 to about 8 percent by weight of the lubricating composition.

In one embodiment, the extreme pressure agent is a sulfur-containing compound. In one embodiment the sulfur-containing compound is a sulfurized olefin, a polysulfide, or mixtures thereof. Examples of the sulfurized olefin include an olefin derived from propylene, isobutylene, pentene, an organic sulfide and/or polysulfide including benzyldisulfide; bis-(chlorobenzyl) disulfide; dibutyl tetrasulfide; di-tertiary butyl polysulfide; and sulfurized methyl ester of oleic acid, a sulfurized alkylphenol, a sulfurized dipentene, a sulfurized terpene, a sulfurized Diels-Alder adduct, an alkyl sulfenyl N'N-dialkyl dithiocarbamates; or mixtures thereof. In one embodiment, the sulfurized olefin includes an olefin derived from propylene, isobutylene, pentene or mixtures thereof.

In one embodiment, the extreme pressure agent comprises a boron-containing compound. The boron-containing compound includes a borate ester, a borate alcohol, a borated dispersant or mixtures thereof. In one embodiment, the boron-containing compound is a borate ester or a borate alcohol. The borate ester or borate alcohol compounds are substantially the same except the borate alcohol has at least one hydroxyl group that is not esterified. Therefore, as used herein the term "borate ester" is used to refer to either borate ester or borate alcohol.

The borate ester may be prepared by the reaction of a boron compound and at least one compound selected from epoxy compounds, halohydrin compounds, epihalohydrin compounds, alcohols and mixtures thereof. The alcohols include dihydric alcohols, trihydric alcohols or higher alcohols, with the proviso for one embodiment that hydroxyl groups are on adjacent carbon atoms, i.e., vicinal. Hereinafter "epoxy compounds" is used when referring to "at least one compound selected from epoxy compounds, halohydrin compounds, epihalohydrin compounds and mixtures thereof."

Boron compounds suitable for preparing the borate ester include the various forms selected from the group consisting of boric acid (including metaboric acid, HBO₂, orthoboric acid, H₃BO₃, and tetraboric acid, H₂B₄O₇), boric oxide, boron trioxide and alkyl borates. The borate ester may also be prepared from boron halides.

In another embodiment, the boron-containing compound is a borated dispersant, typically derived from an N-substituted long chain alkenyl succinimide. In one embodiment, the borated dispersant comprises a polyisobutylene succinimide. The polyisobutylene succinimide may be the same as described above, except it has been borated, typically with boric acid.

Examples of a corrosion inhibitor comprises at least one of benzotriazoles, 1,2,4-triazoles, benzimidazoles, 2-alkyldithiobenzimidazoles, 2-alkyldithiobenzothiazoles, 2-(N,N-dialkyldithiocarbamoyl)benzothiazoles, 2,5-bis(alkyl-dithio)-1,3,4-thiadiazoles, 2,5-bis(N,N-dialkyldithiocarbamoyl)-1,3,4-thiadiazoles, 2-alkyldithio-5-mercapto thiadiazoles or mixtures thereof. In one embodiment the corrosion inhibitor is benzotriazole. In one embodiment the corrosion inhibitor is a 2,5-bis(alkyl-dithio)-1,3,4-thiadiazole. The corrosion inhibitor may be used alone or in combination with other corrosion inhibitors.

The corrosion inhibitor may be a condensation product of dodecenyl succinic acid or anhydride and a fatty acid such as oleic acid with a polyamine. In one embodiment, the corrosion inhibitors include the Synalox® corrosion inhibitor. The Synalox® corrosion inhibitor is typically a homopolymer or copolymer of propylene oxide. The Synalox® corrosion inhibitor is described in more detail in a product brochure with Form No. 118-01453-0702 AMS, published by The Dow Chemical Company. The product brochure is entitled "SYNALOX Lubricants, High-Performance Polyglycols for Demanding Applications."

In one embodiment, the lubricating composition further includes a friction modifier. Suitable friction modifiers also include fatty phosphites, fatty acid amides, fatty epoxides, borated fatty epoxides, fatty amines, glycerol esters, borated glycerol esters, alkoxylated fatty amines, borated alkoxylated fatty amines, metal salts of fatty acids, sulfurized olefins, fatty imidazolines, condensation products of carboxylic acids and polyalkylene-polyamines, metal salts of alkyl salicylates, amine salts of alkylphosphoric acids, or any mixtures thereof. Representatives of each of these types of friction modifiers are known and are commercially available.

The friction modifier may be an amine-containing friction modifier including those derivable from a primary, secondary or tertiary amine. Typically the amine is hydrocarbyl- or hydroxyhydrocarbyl- substituted.

The amine-containing friction modifier may be a hydrocarbyl- substituted primary amine, a hydroxyhydrocarbyl- substituted amine, or mixtures thereof (or, in each instance, alkyl- or hydroxyalkyl-substituted amine). In one embodiment, amine-containing friction modifier is a hydroxyhydrocarbyl- substituted amine, typically a tertiary amine.

When the amine-containing friction modifier is the hydroxyhydrocarbyl-substituted amine and is a tertiary amine, the amine typically contains two hydroxyhydrocarbyl groups and one hydrocarbyl group bonded directly to the nitrogen of the amine. The hydrocarbyl group may contain 1 to 30, or 4 to 26, or 12 to 20 carbon atoms. In one embodiment, the hydrocarbyl group contains 16 to 18 carbon atoms.

In one embodiment, the friction modifier may be a hydroxyhydrocarbyl-substituted (e.g., hydroxyalkyl-substituted) amine. The hydroxyhydrocarbyl- substituted amine may be derived from an alkoxy- group containing 1 to 10, 1 to 6 or 2 to 4 carbon atoms. Examples of a suitable alkoxylated amine (as such materials are often called) include ethoxylated amines. Ethoxylated amines may be derived from 1.79 % Ethomeen® T-12 and 0.90 % Tomah PA-1 as described in Example E of US Patent 5,703,023, column 28, lines 30 to 46. Other suitable alkoxylated amine compounds include commercial alkoxylated fatty amines known by the trademark "ETHOMEEN" and available from Akzo Nobel. Representative examples of these ETHOMEEN™ materials is ETHOMEEN™ C/12 (bis[2-hydroxyethyl]-coco-amine); ETHOMEEN™ C/20 (polyoxyethylene[10]cocoamine); ETHOMEEN™ S/12 (bis[2-hydroxyethyl]-soyamine); ETHOMEEN™ T/12 (bis[2-hydroxyethyl]-tallow-amine); ETHOMEEN™ T/15 (polyoxyethylene-[5]tallowamine); ETHOMEEN™ D/12 (bis[2-hydroxyethyl]oleyl-amine); ETHOMEEN™ 18/12 (bis[2-hydroxyethyl]-octadecylamine); and ETHOMEEN™ 18/25 (polyoxyethylene[15]octadecylamine). Suitable fatty amines and ethoxylated fatty amines are also described in U.S. Patent 4,741,848.

When the hydrocarbyl- substituted amine is a primary amine, the hydrocarbyl group may contain 1 to 30, or 4 to 26, or 12 to 20 carbon atoms. In one embodiment, the hydrocarbyl group contains 14 to 18 carbon atoms.

Primary amines include ethylamine, propylamine, butylamine, 2-ethylhexylamine, octylamine, and dodecylamine, as well as such fatty amines as n-octylamine, n-decylamine, n-dodecylamine, n-tetradecylamine, n-hexadecylamine, n-octadecylamine, and oleylamine. Other useful fatty amines include commercially available fatty amines such as "Armeen®" amines (products available from Akzo Chemicals, Chicago, Illinois), such as Armeen C, Armeen O, Armeen OL, Armeen T, Armeen HT, Armeen S and Armeen SD, wherein the letter designation relates to the fatty group, such as coco, oleyl, tallow, or stearyl groups.

In some embodiments, the friction modifier is glycerol monooleate, an alkylamide such as oleylamide, a derivative of tartaric acid such as a tartrate ester, a tartrimide or a tartramide, or any combination thereof.

The friction modifier may be present at 0.01 to 5, or 0.02 to 2, or 0.05 to 1 percent by weight of the lubricating composition.

In some embodiments, the compositions of the invention include an auxiliary viscosity improver, other than the star polymer described above. Viscosity improvers, also sometimes referred to as viscosity index improvers or viscosity modifiers, may be included in the compositions of this invention. Viscosity improvers are usually polymers, including polyisobutenes, polymethacrylic acid esters, hydrogenated diene polymers, poly(alkyl styrenes), esterified styrene-maleic anhydride copolymers, hydrogenated alkenylarene-conjugated diene copolymers and polyolefins. Multifunctional viscosity improvers, other than those of the present invention, which also have dispersant and/or antioxidancy properties are known and may optionally be used in addition to the products of this invention.

A more detailed description of other performance additives listed above may be found in International publication WO 2007/127615 A (describes driveline additives, particularly for automatic or manual transmissions), in International publication WO 2007/127660 A (describes driveline additives, particularly for gear oils or axle oils), in International publication WO 2007/127663 A (describes additives for hydraulic fluids), and in International publication WO 2007/127661 A (describes additives, for internal combustion lubricants).

In some embodiments, the disclosed technology also provides a method for preparing a star polymer, having a core portion and three or more arms, comprising (a) polymerizing at least one alkyl methacrylate in the presence of a controlled free radical agent to prepare polymer chains with a reactive end group, which polymer chains are precursors that will form the arms of said star polymer; and thereafter (b) reacting the product of step (a) with (i) at least one multifunctional methacrylate monomer or multifunctional acrylate monomer; provided that if the multifunctional monomer is a multifunctional methacrylate monomer, then the product is additionally reacted with (ii) at least one alkyl acrylate monomer; whereby the reaction of step (b) provides a star polymer comprising a core bonded to a multiplicity of arms, wherein the core comprises a crosslinked network of polymers derived from monomers (i) and, when present, (ii).

The disclosed technology further provides a star polymer, having a core portion and three or more arms, wherein (a) the arms comprise a polymer comprising at least one alkyl methacrylate monomer and (b) the core comprises a crosslinked polymer portion comprising (i) at least one multifunctional methacrylate monomer and (ii) at least one alkyl acrylate monomer.

The disclosed technology further provides a lubricant composition comprising an oil of lubricating viscosity and the above polymer, and a method for lubricating a mechanical device comprising supplying thereto such a lubricant composition.

The star polymers of such embodiments may be prepared by an arm-first process. By arm-first it is meant that the alkyl methacrylate monomers (and any other optional monomers) are polymerized to form substantially linear arms, before further reacting with a polyvalent unsaturated (meth)acrylic monomer to form a crosslinked core. By "substantially linear arms" is meant that the arms are not crosslinked, although they may be either branched or they may be linear (apart from the methyl branching imparted by the methacrylic monomers).

The star polymer may have 3 or more arms, or 5 or more arms, or 7 or more arms, or 10 or more arms, for instance 3 to 100, or 4 to 50, or 6 to 30, or 8 to 14 arms. The star polymer may have 120 arms or fewer, or 80 arms or fewer, or 60 arms or fewer.

The monomer units employed to make the arms of the star polymers may be methacryl monomers such as methacrylates, or alkyl methacrylate monomers. Methacrylamides or, in certain embodiments, acrylamides may be present as optional comonomers and may, in certain embodiments, comprise 0 to 10 weight percent or 0 to 5 or 0.01 to 2 or 0.1 to 1 weight percent of the monomers in the arm portions. The alkyl groups of the alkyl methacrylate monomers may generally contain 1 to 40, or 1 to 30, or 1 to 20, or 1 to 18, or 1 to 12, or 1 to 8, or 2 to 18, or 4 to 18, or 8 to 12 carbon atoms. There may be mixtures of alkyl groups with carbon numbers within any of those ranges. In one embodiment, the alkyl groups include methyl, 2-ethylhexyl, and lauryl (e.g., C12-15 or C12-14 alkyl) groups. In one embodiment, the alkyl group may be β-branched and may contain up to 30 carbon atoms.

The arm polymers which will become attached to the core may be prepared as homopolymers or copolymers (i.e., containing two or more monomer types). If prepared as copolymers, they may be random or block copolymers. Controlled radical polymerizations such as RAFT are particularly well suited to preparing block copolymer arms. See, for an example of preparation of block arm copolymers, Example 1 of WO 2012/030616, referred to above. For various types of arms in star polymers and their preparation, albeit by anionic rather than stabilized free radical synthesis, reference may be made to Chapter 13 (pp. 333-368) of "Anionic Polymerization, Principles and Practical Applications" by Henry Hsieh and Roderic Quirk (Marcel Dekker, Inc., New York, 1996) (hereinafter referred to as Hsieh et al.). However, polar vinyl monomers, including (meth)acrylates and (meth)acrylamides may be prone to side reactions during anionic polymerization, making anionic polymerization less desirable.

The length of the arm polymers, that is, the number of monomer units or molecular weight of the arms, may be readily controlled using RAFT technology. In certain embodiments, one or more or each of the arm polymers may contain 20 to 1000, or 30 to 500, or 50 to 300 monomer units.

Also, the various arms which will become attached to the core may be all of the same or similar composition, or different arms may be of different compositions. The latter type of star polymers are referred to as heteroarm star polymers. More complex hetero-arm star polymers may be formed by combining portions of three or more polymeric arms with a coupling agent. In one embodiment, hetero-arm stars may be prepared by combining several batches of polymers with living characteristics prior to linkage and core formation.

Other monomers may also be included in the arms if they are necessary or desirable for efficient polymerization. A vinyl aromatic monomer may be present but is not required. In some embodiments, there will be no vinyl aromatic monomer present, or 0 to 1% or 0.001 to 0.1 percent.

The process formation of the arm polymers may be carried out at a temperature of 20°C to 150°C, or in other embodiments 40°C to 140°C, or 50 to 150°C, or 60 to 130°C, or 80 to 120°C, or 100 to 110°C, or 50 to 70°C.

At this point, the arm polymers will be polymer chains with a reactive end group, that is a reactive free radical or, more properly, a radical that is temporarily reacted with a controlled free radical chain transfer agent such as a RAFT agent, described above. There may be one reactive end group per polymer chain or arm or, in some embodiments, greater than 1, e.g., 1 to 2, or 1.3 to 1.6 polymer chains per chain transfer agent. Also, some chains within the mixture may not have a reactive end group.

After the arm polymer intermediates are prepared, three or more such arms are joined together by attachment to a crosslinked core polymer portion. This may be effected by reacting the arm polymers, which still retain their reactive character, with one or more polyvalent unsaturated (meth)acrylic monomers, that is, at least one multifunctional methacrylate monomer or multifunctional acrylate monomer, where the "multifunctional" or "polyvalent" nature refers to multiple polymerizable unsaturated linkages. At this stage, the polyvalent unsaturated monomers that are used may be either acrylic or methacrylic monomers, and may, in certain embodiments, include materials such as divinyl benzene.

The amount of coupling agent may be an amount suitable to provide coupling of polymer previously prepared as arms onto a core comprising the coupling agent in monomeric, oligomeric, or polymeric form, to provide a star polymer. Typically the mole ratio of coupling agent to polymer arms may be 50:1 to 1.5:1 (or 1:1), or 30:1 to 2:1, or 10:1 to 3:1, or 7:1 to 4:1, or 4:1 to 1:1. In other embodiments, the mole ratio of coupling agent to polymer arms may be 50:1 to 0.5:1, or 30:1 to 1:1, or 7:1 to 2:1, or 7:1 to 5:1, or about 6:1. The desired ratio may also be adjusted to take into account the length of the arms, longer arms sometimes tolerating or requiring more coupling agent than shorter arms. As otherwise expressed, the amount of the multifunctional monomer may be, in certain embodiments, 1 to 20 mole percent or 2 to 20 mole percent, or 2 to 15 mole percent, or 4 to 12 or 5 to 10 or 6 to 9 or about 8 mole percent based on the total monomers present in the star polymer, from steps (a) and (b). In certain embodiments 2 to 20 percent of the mass of the star polymer resides in the core, or alternatively 2 to 15, or 5 to 5 or 7, to 15 or 8 to 12, or 9 to 11 percent (including the amount of the monovalent acrylic monomer, discussed below).

The core forming polymerization may be conducted at temperatures of 40°C to 115°C, or in other embodiments 50°C to 110°C, or 60 to 110°C, or 70 to 110°C or 70 to 105°C, or 80 to 100°C, or 85 to 95°C.

An important feature of the star polymers of the disclosed technology is that an acrylic monomer is incorporated into the polymer at the time of formation of the core or subsequent to the formation of the core. Such monomers will typically be directly covalently bound to the core (and not directly to the arms). If the multifunctional monomer is an acrylic monomer, it can serve as the acrylic monomer. If the multifunctional monomer is a methacrylic monomer, then an acrylic monomer, which may be a monofunctional alkyl acrylate monomer, will be introduced. The use of one or more acrylate monomers at this point is in contrast to the use of methacrylate monomers used for the formation of the arms. Thus, the star polymer will contain methacrylate monomer units in the arms and acrylate monomer units in or associated with the core, which may be polyvalent acrylic monomers or may be in addition to polyvalent methacrylic monomers which effect the crosslinking of the core. Thus, the product of step (a), the arm forming step, will be reacted with the multifunctional acrylic or methacrylic monomer as a crosslinking or core-forming monomer and, if the multifunctional monomer is a methacrylic monomer, also reacted with a monovalent acrylic monomer. If desired, an additional monovalent acrylic monomer may also be used if the polyvalent monomer is an acrylic monomer. Thus, in one embodiment, the product of step (a), the arm-forming step, is reacted with a multifunctional methacrylate monomer or a multifunctional acrylate monomer (either one or the other or a mixture thereof) and at least one alkyl acrylate monomer. The arm component may be reacted first with the crosslinking monomer (multifunctional (meth)acrylate or, in one embodiment, multifunctional methacrylate) and thereafter, if required or desired, with the monofunctional acrylate monomer. (This sequential reaction is possible because of the "living" nature of the polymerization.) Alternatively, the arm component may be reacted simultaneously with a mixture of the crosslinking monomer (multifunctional (meth)acrylate or in one embodiment multifunctional methacrylate) and the monofunctional acrylate monomer. In certain embodiments, the amount of the multifunctional methacrylate will greater than or equal to the amount of the monofunctional alkyl acrylate, on a weight basis.

The acrylic component of or associated with the core will be based on or derived from acrylic acid. These may be monomers derived from saturated alcohols, such as methyl acrylate, ethyl acrylate, propyl acrylate, butyl acrylate, and longer chain branched or linear alkyl acrylates, including 2-ethylhexyl acrylate, dodecyl acrylate, and mixtures thereof, including such commercial materials as lauryl acrylate (predominantly dodecyl acrylate but also containing other isomers and materials of shorter and longer carbon chains). The alkyl groups of the acrylate monomers may contain 1 to 40, or 1 to 30, or 1 to 20, or 1 to 18, or 1 to 12, or 1 to 8, or 2 to 18, or 4 to 18, or 8 to 12 carbon atoms. There may be mixtures of alkyl groups with carbon numbers within any of those ranges. In one embodiment the alkyl groups include methyl, ethyl, butyl 2-ethylhexyl, and lauryl, i.e., C₁₂₋₁₅ alkyl. In one embodiment, the alkyl group may be β-branched and may contain up to 30 carbon atoms.

The amount of the acrylate monomer may, in some embodiments, be 0.2 to 5 mole percent or 0.5 to 4 or 0.8 to 3 or 1 to 2 mole percent based on the total monomers present in the star polymer, from steps (a) and (b).

The overall composition containing star polymers may also have uncoupled polymeric arms present (also referred to as a polymer chain or linear polymer). The percentage conversion of a polymer chain to star polymer may be at least 10%, or at least 20%, or at least 40%, or at least 55%, for instance at least 70%, at least 75% or at least 80%. In one embodiment the conversion of polymer chain to star polymer may be 90%, 95% or 100%. In one embodiment, a portion of the polymer chains does not form a star polymer and remains as a linear polymer. In one embodiment, the star polymer is in the form of a mixture with linear polymer chains (also referred to as uncoupled polymeric arms). In different embodiments, the amount of star polymer composition may be 10 wt % to 85 wt %, or 25 wt % to 70 wt % of the amount of polymer. In different embodiments the linear polymer chains may be present at 15 wt % to 90 wt %, or 30 wt % to 75 wt % of the amount of RAFT polymer.

Generally, the star polymer of the disclosed technology may be present in the lubricant at ranges including 0.01 wt % to 60 wt % or 0.5 wt % to 60 wt % or 1 to 12 wt% of the lubricating composition.

### Industrial Application

The star polymer of the invention may be useful for a lubricant suitable for lubricating a variety of mechanical devices. The mechanical device includes at least one of an internal combustion engine (for crankcase lubrication), a hydraulic system, or a driveline system.

In one embodiment, the internal combustion engine may be a diesel fueled engine (typically a heavy duty diesel engine), a gasoline fueled engine, a natural gas fueled engine or a mixed gasoline/alcohol fueled engine. In one embodiment, the internal combustion engine may be a diesel fueled engine and in another embodiment a gasoline fueled engine. In one embodiment, the internal combustion engine may be a heavy duty diesel engine.

The internal combustion engine may or may not have an Exhaust Gas Recirculation (EGR) system. The internal combustion engine may be fitted with an emission control system or a turbocharger. Examples of the emission control system include diesel particulate filters (DPF), or systems employing selective catalytic reduction (SCR).

The internal combustion engine may be a 2-stroke or 4-stroke engine. Suitable internal combustion engines include marine diesel engines, aviation piston engines, low-load diesel engines, and automobile and truck engines.

Typically, the driveline system utilises a driveline lubricant selected from an axle oil, a gear oil, a gearbox oil, a traction drive transmission fluid, an automatic transmission fluid or a manual transmission fluid.

The gear oil or axle oil may be used in planetary hub reduction axles, mechanical steering and transfer gear boxes in utility vehicles, synchromesh gear boxes, power take-off gears, limited slip axles, and planetary hub reduction gear boxes.

The automatic transmission includes continuously variable transmissions (CVT), infinitely variable transmissions (IVT), Toroidal transmissions, continuously slipping torque converted clutches (CSTCC), stepped automatic transmissions or dual clutch transmissions (DCT).

Typically, the hydraulic system utilises a hydraulic fluid (which may be a piston pump fluid or a vane pump fluid), and an internal combustion engine utilizes an engine lubricant.

The star polymer of the present invention may be present in a lubricant for a gear oil or axle fluid at 2 to 60 wt %, or 5 to 50 wt %, or 10 to 40 wt % of the lubricant. The weight average molecular weight of the star polymer for a gear or axle lubricant may be in the range of 8,000 to 150,000, or 10,000 to 100,000 or 15,000 to 75,000, or 25,000 to 70,000.

The star polymer of the present invention may be present in a lubricant for an automatic transmission fluid at 0.5 wt % to 12 wt %, or 1 wt % to 10 wt %, or 2 wt % to 8 wt % of the lubricant. The weight average molecular weight of the star polymer in an automatic transmission lubricant may be in the range of 125,000 to 400,000, or 175,000 to 375,000 or 225,000 to 325,000.

The star polymer of the present invention may be present in a lubricant for hydraulic fluid at 0.01 wt % to 12 wt %, or 0.05 wt % to 10 wt %, or 0.075 wt % to 8 wt % of the lubricant. The weight average molecular weight of the star polymer of the invention for hydraulic fluid may be in the range of 50,000 to 1,000,000, or 100,000 to 800,000, or 120,000 to 700,000.

The star polymer of the present invention may be present in a lubricant for an internal combustion engine at 0.01 to 12 wt %, or 0.05 wt % to 10 wt %, or 0.075 to 8 wt %, or 0.5 to 5 wt% of the lubricant. The weight average molecular weight of the star polymer of the invention in an internal combustion engine may be 100,000 to 1,000,000, or 200,000 to 1,000,000, or 300,000 to 1,000,000, or 350,000 to 1,000,000, or 400,000 to 800,000.

Phosphorus compounds are often the primary antiwear agent in a lubricant, typically a zinc dialkyldithiophosphate (ZDDP) in engine oil and hydraulic fluids, an ashless ester like dibutyl phosphite in automatic transmission fluids and an amine salt of an alkylphosphoric acid in gear oils. In engine oils, the amount of phosphorus (typically supplied as ZDDP) may be less than 0.08% by weight P in the finished lubricant, or 0.02-0.06 % by weight P. In hydraulic fluids, automatic transmission fluids and gear oils, the phosphorus level may be even lower, such as 0.05 or less, or 0.01-0.04 or 0.01-0.03 % by weight P.

### EXAMPLES

The following examples provide illustrations of the invention. These examples are non-exhaustive and are not intended to limit the scope of the invention.

### Example 1 - Comparative Example.

A star polymer composition is prepared using known preparation methods in an arm first approach, using a mixture of mono-functional monomers including C12-15-alkyl methacrylate (LMA), methyl methacrylate (MMA), and 2-ethylhexyl (meth)acrylate (EHMA) to prepare the arms and ethylene glycol dimethacrylate (EGDMA) as the multi-functional monomer used in the preparation of the core. A thiocarbonate chain transfer agent and initiator are used in the preparation of the star polymer.

The resulting star polymer composition contains "tight" core star polymers having a number average molecular weight of 16,607, a PDI of 1.28 and an average arm per star, based on the number average molecular weight, of 7.8.

The stars of Example 1 are then blended into an oil of lubricating viscosity such that the blend has a kinetic viscosity measured by ASTM D445, at 100°C of about 11 cSt and at 40°C of about 65 cSt, which required a blend of 40 percent by weight oil and 60 percent by weight stars. The viscosity index (VI) and shear stability index (SSI) of the blend is then measured using ASTM D2270 and ASTM D5621A, giving results of 162 and 18.5 respectively.

### Example 2 - Inventive Example.

A star polymer composition is prepared using the same process and materials described in Example 1 above except that the multi-functional monomer used to form the core of the star is replaced with a mixture of mono-functional monomer and multi-functional monomer, consisting of a mixture of EGDMA and MMA where the monomers are present in a weight ratio of 1:3 EGDMA:MMA. Thus, the stars of Example 2 are prepared using a significantly smaller amount of EGDMA used in preparation of the stars of Example 1.

The resulting star polymer composition contains "loose" core star polymers having a number average molecular weight of 16,918, a PDI of 1.31 and an average arm per star, based on number average molecular weight, of 9.7.

Just as above, the stars of Example 2 are then blended into an oil of lubricating viscosity, using the same oil from Example 1 above, such that the blend has a kinetic viscosity, measured by ASTM D445, at 100°C of about 11 cSt and at 40°C of about 64 cSt, which required a blend of 50 percent by weight oil and 50 percent by weight stars to achieve (and thus allow a comparison to the material from Example 1). The viscosity index (VI) and shear stability index (SSI) of the blend is then measured using ASTM D2270 and ASTM D5621A, giving results of 157 and 23.2 respectively.

The table below shows the results from Examples 1 and 2:

**Table 1: Summary of Results**

| | Blend of Comparative Example 1 | Blend of Inventive Example 2 |
|---|---|---|
| Kinetic Viscosity at 100°C (ASTM D445) | 11 cSt | 11 cSt |
| Kinetic Viscosity at 40°C (ASTM D445) | 65 cSt | 64 cSt |
| Viscosity Index (ASTM D2270) | 162 | 157 |
| Shear Stability Index (ASTM D5621A) | 18.5 | 23.2 |

The number average molecular weight of the stars and the PDI values for the stars are very comparable, indicating very similar stars were made such that one would expect the Example 2 material to provide comparable performance to the Example 1 material as an additive in a lubricating composition. However, the stars of Example 2 were made with significantly less EGDMA, a very expensive raw material critical to star core formation due to its multi-functional nature. Despite this significant reduction in the amount of multi-functional monomer used, the stars of Example 2 had similar final properties and, even more surprisingly, actually had a higher average arm per star, increasing the value by more than 20%.

These results show that the loose core stars of the present invention can be made significantly more effectively and efficiently than more conventional stars, using significantly reduced amounts of expensive raw materials while still providing comparable stars that provide the same, if not better, viscosity modification, including but not limited to viscosity index control, shear stability, and low temperature properties. It is also noted that the loose core stars of the invention not only provided at least comparable performance after being made with significantly reduced amounts of expensive multi-functional monomer, but that the comparable performance was also achieved using significantly less star polymer in the lubricating composition. Example 1 required a star polymer content of 60 percent by weight to achieve the targeted blend victory for testing, while Example 2 required only a 50 percent by weight star polymer content to reach the same target and then provide comparable performance. This represents over a 15 percent reduction in the amount of star polymer needed to provide the same performance.

### Example 3 - Inventive Example.

A star polymer composition is prepared using known RAFT polymerization techniques, using the same process and materials described in Example 2 above except that the mono-functional monomer used to form the arms of the star is replaced with a 70:30 mixture of LMA and EHMA. The resulting product consists of a star polymer with approximately 11 polymer arms with a conversion of arms to star of 86% leaving a residual arm content of 14%.

### Example 4 - Inventive Example.

A star polymer composition is prepared using known ATRP polymerization techniques. A five necked 1 L round bottom flask equipped with a mechanical stirrer, a thermocouple, a condenser and sub-surface nitrogen sparge tube and septum sealed port is charged with LMA (200g) and EHMA (86g), Me₆Tren ligand (1.37g), and toluene (297g) and is degassed for 3 hours. The Cu(I)Cl (0.59g, 99.9% pure) is weighed analytically and washed with acetic acid under nitrogen, then diethyl ether and is dried over a stream of nitrogen. The solid catalyst is added to the reaction flask and the mixture is continually purged with nitrogen for an hour. The clear pale green solution is heated to 80°C, and once at temperature is treated with ethyl-2-bromoisobutyrate *via* syringe. The reaction is held at 80°C with stirring and slow sub-surface nitrogen purge for 20 hours (the mixture turns rapidly to opaque green on initiation). EGDMA (4.0 g) and MMA (12.0g) are charged and stirred for four hours, then a further portion of EGDMA (4.0 g) and MMA (12.0g) is added and stirred for four hours before cooling the reaction. SUCS3 oil (295 g) is then added and stirred to homogenise. Neutral alumina is then introduced and the mixture filtered over a pad of neutral alumina, followed by filtering with Fax5 on top of a filter cloth on top of a qualitative cellulose filter paper. The product may still contain copper, so before GPC analysis, a small sample is filtered through a short column of alumina. The final product consists of a star polymer with approximately 11 polymer arms on the star and with a weight per cent conversion of polymer arms to star polymer of approximately 32%. In addition to the star polymer, a second peak of very high molecular weight polymer is formed at about 8% weight of the product with an average molecular weight consistent with the coupling of four of the star polymers together into a high molecular weight polymer. Approximately 60% weight of the final product is residual arms.

### Example 5 - Inventive Example

A star polymer composition is prepared using known NMP polymerization techniques. A 1 L flange flask is charged with LMACR (142g), styrene (158g), TEMPO (1.2g), BPO (1.9g) and camphorsulfonic acid (0.6 g). The flask is fitted with a flange lid and clip, stirrer rod and overhead stirrer, water-cooled condenser, thermocouple and nitrogen inlet (0.5 SCFH). The flask is heated to 133°C with stir rate of 220 rpm. After 4.5 h, the flask is heated to 145°C. Once at temperature, camphorsulfonic acid (0.3 g) and di-t-butyl peroxide (0.3 g, 0.38 ml) are charged to the flask. On addition a slow exotherm is observed. After 1 h, further t-butyl peroxide (0.3 g) is charged to the flask and then held for a further 1.5 h. SUCS3 (75 g) is then charged to the flask with cooling to 90 °C. The flask is held stirring at 90 °C for 14.5 h resulting in the arm polymer. The arm polymer is reheated to 133°C. Divinyl benzene and styrene are then charged to the flask in 2 portions. The 1st portion divinyl benzene (30 g) and styrene (60g) are charged and then held for 2 h at 133°C. The 2nd portion of divinyl benzene (7.5 g) and styrene (15g) are charged and then held for 2 h at 133°C. SUCS3 (375 g) is then charged to the flask to dilute the polymer. The product is then cooled to RT. The star polymer is formed with an average of 6 arms per star and in approximately 32% weight of the final product and the residual arm polymer content of the final product is approximately 68%.

As described hereinafter, the molecular weight of the viscosity modifier has been determined using known methods, such as GPC analysis using polystyrene standards. Methods for determining molecular weights of polymers are well known. The methods are described for instance: (i) P.J. Flory, "Principles of Polymer Chemistry", Cornell University Press 91953), Chapter VII, pp. 266-315; or (ii) "Macromolecules, an Introduction to Polymer Science", F. A. Bovey and F. H. Winslow, Editors, Academic Press (1979), pp. 296-312. As used herein, the weight average and number weight average molecular weights of the polymers of the invention are obtained by integrating the area under the peak corresponding to the star polymer of the invention, which is normally the major high molecular weight peak, excluding peaks associated with diluents, impurities, uncoupled polymer chains and other additives.

### Example 6

Additional examples demonstrating still further embodiments of the invention are also included. A series of polymethacrylates of different weight average molecular weight (Mw) and monomer compositions are prepared by the general process of varying the amount of initiator and chain transfer agent (CTA) according to the formula Mn=g of monomer/ (moles of initiator + moles CTA), to form a linear polymer. The linear polymer is then reacted with a multifunctional (meth)acrylate monomer, and in certain instances, an additional acrylate monomer. Monomers, Trigonox™-21 (initiator), CTA (Chain Transfer Agent) and oil (typically 30% wt) are combined at room temperature in a vessel equipped with a nitrogen inlet with nitrogen flow, a stirrer, a thermocouple, and a water-cooled condenser. The mixture is stirred under a nitrogen blanket to ensure mixing. The mixture is then set to be heated to about 80°C for about 4 hrs. An in-process sample is removed to obtain number average molecular weight (Mₙ) of the linear arm polymer, measured by gel permeation chromatography (GPC). The multifunctional monomer (ethylene glycol dimethacrylate, EGDMA or dipropylene glycol diacrylate, DPGDA) is then added, with or without the acrylate monomer (which is added together with or subsequent to addition of the multifunctional monomer, as indicated), and then the reaction is stirred until substantially all monomer is consumed, resulting in the final product.

The detailed compositions of the monomers employed are presented in Table 2, below. The weight percentages of arm monomers are based on 100% of the arm monomers. The amount reported for the acrylate monomer is parts by weight based on 100 parts (or g per 100 g) of the combined LMAc, other lower alkyl methacrylates, and EGDMA. The mole percent of the acrylate monomer is calculated based on moles of acrylate monomer as compared with moles of arm polymer (not monomers), that is, mole ratio x 100; hence the values may be greater than 100%.

**Table 2**

| Ex. | Arm monomers, wt. % | | Trigonox 21™ initiator, wt% | Difunctional monomer^{b} | Acrylate monomer type, amount, mol% | Time of acrylate addition^{c} |
|---|---|---|---|---|---|---|
| | LMAC | other^{a} | | | | |
| 6-A | 80 | 20 | 1.35 | E | EHA, 1.2,69 | 90 |
| 6-B | 60 | 40 | 0.68 | E | EA, 0.94, 162 | 40 |
| 6-C | 80 | 20 | 0.46 | E | EHA, 0.94, 103 | 60 |
| 6-D | 80 | 20 | 0.46 | E | EHA, 0.98, 111 | 90 |
| 6-E | 80 | 20 | 0.46 | E | EHA, 0.93, 129 | 90 |
| 6-F | 80 | 20 | 0.46 | E | EA, 0.94, 214 | 0 |
| 6-G | 80 | 20 | 0.46 | E | EHA, 0.94, 129 | 90 |
| 6-H | 80 | 20 | 0.46 | E | EA, 3.1, 661 | 0 |
| 6-1 | 80 | 20 | 0.46 | E | EA, 0.94, 210 | 90 |
| 6-J | 80 | 20 | 0.49 | E | EHA,0.93, 154 | 90 |
| 6-K | 80 | 20 | 0.49 | E | EHA, 2.8, 430 | 90 |
| 6-L | 80 | 20 | 0.49 | E | EHA, 0.93, 142 | 90 |
| 6-M | 81 | 19 | 0.24 | E | EHA, 0.97, 230 | 90 |
| 6-N | 80 | 20 | 0.46 | D | acrylate functionality provided by difunctional monomer "D" | |
| 6-O | 80 | 20 | 0.46 | D | acrylate functionality provided by difunctional monomer "D" | |

| | | | | | | |
|---|---|---|---|---|---|---|
| *LMAc = mixed C12-15 methacrylates (lauryl methacrylate)* *a. other = one or more alkyl methacrylates lower than C12-15 alkyl* *b. E = ethylene glycol dimethacrylate; D = dipropylene glycol diacrylate (an acrylate)* *c. Minutes after addition of the difunctional monomer. "0" means added simultaneously with the addition of the difunctional monomer.* *EHA = 2-ethylhexyl acrylate* *EA = ethyl acrylate* | | | | | | |

Further analysis of certain examples is set forth in Table 3:

**Table 3**

| Ex | Mₙ of arm | Ratio^{a,b} | Average No. of arms^{b} | Mw of the star |
|---|---|---|---|---|
| 6-A | 11,000 | 4:1 | 11 | 158,000 |
| 6-B | 16,200 | 5:1 | 9 | 194,000 |
| 6-C | 19,000 | 6:1 | 9 | 226,000 |
| 6-D | 19,600 | 7:1 | 11 | 258,000 |
| 6-E | 23,800 | 9:1 | 14 | 439,000 |
| 6-F | 23,800 | 7:1 | 9 | 271,000 |
| 6-G | 23,800 | 8:1 | 12 | 370,000 |
| 6-H | 21,300 | 7:1 | 9 | 247,000 |
| 6-I | 21,000 | 7:1 | 10 | 226,000 |
| 6-J | 28,300 | 10:1 | 15 | 524,000 |
| 6-K | 26,400 | 10:1 | 13 | 473,000 |
| 6-L | 42,400 | 6:1 | 13 | 476,000 |
| 6-M | 42,400 | 6:1 | 9 | 537,000 |
| 6-N | 20,900 | 7:1 | 6 | 159,000 |
| 6-O | 22,700 | 13:1 | 12 | 363,000 |

| | | | | |
|---|---|---|---|---|
| *a. mole ratio of EGDMA or dipropylene glycol diacrylate to polymer arms* *b. Calculated values* | | | | |

The star polymer materials from the examples are, in some cases, diluted with additional oil, to typically 30-60%, and may be evaluated for thermal stability by heating them in a sealed vial in an oven at 150 °C for 6 hours. The particular value of viscosity of a sample will depend in part on the amount of diluent oil present, so the absolute value of viscosity of one sample should not be directly compared with that of another. The bulk viscosity (kinematic viscosity) at 100 °C in mm²/s (cSt) before and after heat treatment may be measured. Such testing shows the polymers that have incorporated acrylate monomer into the polymer core have significantly less viscosity loss after heat treatment.

The examples described above are presented again below in Table 4, but here with more detail on the arm monomers (expressed as the wt% of each of each of the monomers), core monomers (expressed as the mole ratios of the monomers used), post treatment (if any) of additional monomer added to the core, and when available, the number average molecular weight of the arms and the overall star. The weight percent values for the monomers listed under the arm composition correspond to the amounts of monomer in the mixture used to prepare the arms of the example. The post treat monomer is part of the core composition and is added after the core has been formed. The weight ratio values listed, including the weight ratio value for the post treat monomer, correspond to the amounts of monomer in the mixture used to form the core of the examples.

**Table 4**

| Ex | Arm Composition | | | Core Composition | | | Post Treat (wt ratio) | Arm Mn (in k's) | Star Mn (in k's) |
|---|---|---|---|---|---|---|---|---|---|
| | LMACR (wt%) | MMACR (wt%) | EHMA (wt%) | EGDMA (wt ratio) | MMACR (wt ratio) | OTHER (wt ratio) | | | |
| 1 | 60 | 10 | 30 | 1 | 0 | 0 | 0 | 16.2 | 141 |
| 2 | 80 | 10 | 10 | 1 | 3 | 0 | 0 | 27.7 | 366 |
| 3 | 70 | 0 | 30 | 1 | 3 | 0 | 0 | 16.9 | 197 |
| 4-A | 0 | 0 | 0 | 1 | 0 | 0 | 1^{d} | | |
| 4-B | 70 | 10 | 20 | 1 | 3 | 0 | 0 | 16.9 | 165 |
| 4-C | 80 | 10 | 10 | 1 | 1 | 0 | 0 | 31.8 | 1060 |
| 4-D | 80 | 10 | 10 | 1 | 0 | 3^{a} | 0 | 42.0 | 405 |
| 4-E | 80 | 10 | 10 | 1 | 0 | 2^{a} | 0 | 33.4 | 803 |
| 5-A | 80 | 15 | 5 | 6 | 0 | 2^{b} | 0 | 20.6 | 172 |
| 5-B | 81 | 19 | 0 | 3 | 0 | 0 | 1^{e} | 42.4 | 370 |
| 5-C | 80 | 10 | 10 | 7 | 0 | 0 | 1^{e} | 28.3 | 400 |
| 6-A | 80 | 10 | 10 | 12 | 0 | 0 | 1^{e} | 11.0 | 126 |
| 6-B | 60 | 10 | 30 | 7 | 0 | 0 | 1^{f} | 16.2 | 141 |
| 6-C | 80 | 15 | 5 | 6 | 0 | 0 | 1^{e} | 19.0 | 172 |
| 6-D | 80 | 15 | 5 | 6 | 0 | 0 | 1^{e} | 19.6 | 291 |
| 6-E | 80 | 15 | 5 | 0 | 0 | 0 | 1^{e} | 23.8 | 439 |
| 6-F | 80 | 15 | 5 | 6 | 0 | 0 | 1^{f} | 21.4 | 197 |
| 6-G | 80 | 15 | 5 | 6 | 0 | 0 | 1^{e} | 23.8 | 292 |
| 6-H | 80 | 15 | 5 | 2 | 1 | 0 | 0 | 21.3 | 184 |
| 6-1 | 80 | 15 | 5 | 6 | 0 | 0 | 1^{f} | 20.7 | 210 |
| 6-J | 80 | 10 | 10 | 7 | 0 | 0 | 1^{e} | 28.3 | 400 |
| 6-K | 80 | 10 | 10 | 2 | 0 | 0 | 1^{e} | 26.4 | 338 |
| 6-L | 80 | 10 | 10 | 7 | 0 | 0 | 1^{e} | 26.1 | 348 |
| 6-M | 81 | 19 | 0 | 3 | 0 | 0 | 1^{e} | 42.4 | 370 |
| 6-N | 80 | 15 | 5 | 0 | 0 | 1^{c} | 0 | 20.9 | 123 |
| 6-O | 80 | 15 | 5 | 0 | 0 | 1^{c} | 0 | 22.7 | 272 |

| | | | | | | | | | |
|---|---|---|---|---|---|---|---|---|---|
| *a* - *The OTHER core monomer in 4-D and 4-E is a mixture ofLMACR, EHMA, and MMACR.* *b* - *The OTHER core monomer in 5-A is a mixture of EHAT and EAT.* *c* - *The OTHER core monomer in 6-N and 6-O is DPGDA.* *d* - *The Post Treat core monomer in 4-A is MMACR.* *e* - *The Post Treat core monomer in 5-B, 5-C, 6-A, 6-C, 6-D, 6-E, 6-G, 6-J, 6-K, 6-L, 6-M is EHAT.* *f - The Post Treat core monomer in 6-B, 6-F, and 6-I is EAT.* | | | | | | | | | |

In addition, two further examples may be prepared using the same methods described above. These additional examples would be expected to have the following properties, summarized in the table below.

**Table 6**

| Ex | Arm Composition | | | Core Composition | | | Post Treat (mol ratio) | Arm Mn (in k's) | Star Mn (in k's) |
|---|---|---|---|---|---|---|---|---|---|
| | LMACR (wt%) | MMACR (wt%) | EHMA (wt%) | EGDMA (mol ratio) | MMACR (mol ratio) | OTHER (mol ratio) | | | |
| 6-P | 80 | 15 | 5 | 0 | 0 | 5^{a} | 0 | 22 | 308 |
| 6-Q | 80 | 15 | 5 | 0 | 0 | 1^{b} | 4^{C} | 22 | 230 |

| | | | | | | | | | |
|---|---|---|---|---|---|---|---|---|---|
| *a* - *The OTHER core monomer in 6-P is a mixture of DPGDA and EHAT (in a 1:4 molar ratio).* *b* - *The OTHER core monomer in 6-Q is DPGDA.* *c* - *The Post Treat core monomer in 6-Q is EAT.* | | | | | | | | | |

As used herein, and unless otherwise noted, LMACR and/or LMAC means lauryl methacrylate monomer, MMACR and/or MMAC means methyl methacrylate monomer, EHMA means 2-ethylhexyl methacrylate, EGDMA means ethylene glycol dimethacrylate, EHAT and/or EHA means 2-ethylhexyl acrylate, EAT and/or EA means ethyl acrylate, and DPGDA means dipropylene glycol diacrylate.

As used herein, the term "hydrocarbyl substituent" or "hydrocarbyl group" is used in its ordinary sense, which is well-known to those skilled in the art. Specifically, it refers to a group having a carbon atom directly attached to the remainder of the molecule and having predominantly hydrocarbon character. Examples of hydrocarbyl groups include: hydrocarbon substituents, including aliphatic, alicyclic, and aromatic substituents; substituted hydrocarbon substituents, that is, substituents containing non-hydrocarbon groups which, in the context of this invention, do not alter the predominantly hydrocarbon nature of the substituent; and hetero substituents, that is, substituents which similarly have a predominantly hydrocarbon character but contain other than carbon in a ring or chain.

Still more examples of hydrocarbyl groups include: (i) hydrocarbon substituents, that is, aliphatic (e.g., alkyl or alkenyl), alicyclic (e.g., cycloalkyl, cycloalkenyl) substituents, and aromatic-, aliphatic-, and alicyclic-substituted aromatic substituents, as well as cyclic substituents wherein the ring is completed through another portion of the molecule (e.g., two substituents together form a ring); (ii) substituted hydrocarbon substituents, that is, substituents containing non-hydrocarbon groups which, in the context of this invention, do not alter the predominantly hydrocarbon nature of the substituent (e.g., halo (especially chloro and fluoro), hydroxy, alkoxy, mercapto, alkylmercapto, nitro, nitroso, and sulfoxy); (iii) hetero substituents, that is, substituents which, while having a predominantly hydrocarbon character, in the context of this invention, contain other than carbon in a ring or chain otherwise composed of carbon atoms.

Heteroatoms include sulfur, oxygen, nitrogen, and encompass substituents as pyridyl, furyl, thienyl and imidazolyl. In general, no more than two, preferably no more than one, non-hydrocarbon substituent will be present for every ten carbon atoms in the hydrocarbyl group; typically, there will be no non-hydrocarbon substituents in the hydrocarbyl group.

Unless otherwise indicated, each chemical or composition referred to herein should be interpreted as being a commercial grade material which may contain the isomers, by-products, derivatives, and other such materials which are normally understood to be present in the commercial grade. However, the amount of each chemical component is presented exclusive of any solvent or diluent oil, which may be customarily present in the commercial material, unless otherwise indicated.

It is known that some of the materials described above may interact in the final formulation, so that the components of the final formulation may be different from those that are initially added. The products formed thereby, including the products formed upon employing lubricant composition of the present invention in its intended use, may not be susceptible of easy description. Nevertheless, all such modifications and reaction products are included within the scope of the present invention; the present invention encompasses lubricant composition prepared by admixing the components described above.

Each of the documents referred to above is incorporated herein by reference. Except in the Examples, or where otherwise explicitly indicated, all numerical quantities in this description specifying amounts of materials, reaction conditions, molecular weights, number of carbon atoms, and the like, are to be understood as modified by the word "about." It is to be understood that the upper and lower amount, range, and ratio limits set forth herein may be independently combined. Similarly, the ranges and amounts for each element of the invention may be used together with ranges or amounts for any of the other elements.

While the invention has been explained in relation to its preferred embodiments, it is to be understood that various modifications thereof will become apparent to those skilled in the art upon reading the specification. Therefore, it is to be understood that the invention disclosed herein is intended to cover such modifications as fall within the scope of the appended claims.

## Claims

1. A star polymer wherein said star polymer comprises a core bonded to at least three arms;
wherein the core of the star polymer comprises a crosslinked network of polymers derived from a mixture of monomers comprising:
(a) one or more multi-functional monomers; and
(b) one or more mono-functional monomers; and
wherein the arms of the star polymer are derived from a polymer mixture comprising polymer arm precursors made from (i) one or more mono-functional monomers, wherein said precursors include at least one reactive end group.

2. The star polymer of claim 1 wherein the arms of the star polymer comprise polymers derived from a mixture of: (i) one or more mono-functional monomers; (ii) a chain transfer agent; and (iii) an initiator.

3. The composition of claim 1 wherein the multi-functional monomers of component (a) comprise an alkylene glycol dimethacrylate, a trialkylolalkane trimethacrylate, di-alkane diol dimethacrylate, or combinations thereof, where the alkyl, alkylol, alkylene, and alkane groups each independently contain from 1 to 20 carbon atoms; and
wherein the mono-functional monomers of component (b) comprise alkyl methacrylate monomer where the alkyl group contains from 1 to 20 carbon atoms.

4. The composition of claim 2 wherein the mono-functional monomers of component (i) comprise alkyl methacrylate monomer where the alkyl group contains from 1 to 20 carbon atoms; and
wherein the chain transfer agent of component (ii) comprises a RAFT chain transfer agent that includes at least one group capable of forming a radical species that is suitable for initiating a radical polymerization; and
wherein the initiator of component (iii) comprises a peroxy initiator or AIBN.

5. The composition of claim 1 wherein:
component (a) makes up 0.1 to 35 percent by weight of the star polymer;
component (b) makes up 0.9 to 35 percent by weight of the star polymer;
component (i) makes up 30 to 99 percent by weight of the star polymer

6. A lubricant composition comprising an oil of lubricating viscosity and a star polymer wherein said star polymer comprises a core bonded to at least three arms;
wherein the core of the star polymer comprises a crosslinked network of polymers derived from a mixture of monomers comprising:
(a) one or more multi-functional monomers; and
(b) one or more mono-functional monomers;
wherein the arms of the star polymer are derived from a polymer mixture comprising polymer arm precursors made from (i) one or more mono-functional monomers, wherein said precursors include at least one reactive end group.

7. The star polymer of claim 1 wherein the arms of the star polymer comprise polymers derived from a mixture of: (i) one or more mono-functional monomers; (ii) a chain transfer agent; and (iii) an initiator.

8. The composition of claim 6, wherein the multi-functional monomers of component (a) comprise an alkylene glycol dimethacrylate, a trialkylolalkane trimethacrylate, di-alkane diol dimethacrylate, or combinations thereof, where the alkyl, alkylol, alkylene, and alkane groups each independently contain from 1 to 20 carbon atoms; and
wherein the mono-functional monomers of component (b) comprise alkyl methacrylate monomer where the alkyl group contains from 1 to 20 carbon atoms.

9. The composition of claim 7, wherein the mono-functional monomers of component (i) comprise alkyl methacrylate monomer where the alkyl group contains from 1 to 20 carbon atoms;
wherein the chain transfer agent of component (ii) comprises a trithiocarbonate that includes at least one group capable of forming a radical species that is suitable for initiating a radical polymerization; and
wherein the initiator of component (iii) comprises a peroxy initiator or AIBN.

10. The composition of claim 6 wherein:
the oil of lubricating viscosity makes up from 1 to 99 percent by weight of the lubricant composition and the star polymer makes up from 99 to 1 percent by weight of the lubricant composition, wherein
component (a) makes up 0.1 to 35 percent by weight of the star polymer;
component (b) makes up 0.9 to 35 percent by weight of the star polymer;
component (i) makes up 30 to 99 percent by weight of the star polymer

11. A method of making a star polymer comprising the steps of
I. reacting at a temperature of 45°C or higher (i) one or more mono-functional monomers;
wherein the reaction of step I yields polymers which are precursors that will form the arms of said polymer star wherein said precursors include at least one reactive end group; and
II. reacting at a temperature of 45°C or higher:
(a) one or more multi-functional monomers;
(b) one or more mono-functional monomers; and
(c) the reaction product of step I;
wherein the reaction of step II yields a star polymer comprising a core bonded to at least three arms wherein the core of the star polymer comprises a crosslinked network of polymers derived from a mixture of monomers (a) and (b).

12. The method of claim 11 wherein Step I comprises reacting at a temperature of 45°C or higher:
(i) one or more mono-functional monomers;
(ii) a chain transfer agent; and
(iii) an initiator;

13. The method of claim 11, wherein the multi-functional monomers of component (a) comprise an alkylene glycol dimethacrylate, a trialkylolalkane trimethacrylate, dialkane diol dimethacrylate, or combinations thereof, where the alkyl, alkylol, alkylene, and alkane groups each independently contain from 1 to 20 carbon atoms; and
wherein the mono-functional monomers of component (b) comprise alkyl methacrylate monomer where the alkyl group contains from 1 to 20 carbon atoms.

14. The method of claim 12, wherein the mono-functional monomers of component (i) comprise alkyl methacrylate monomer where the alkyl group contains from 1 to 20 carbon atoms;
wherein the chain transfer agent of component (ii) comprises a trithiocarbonate that includes at least one group capable of forming a radical species that is suitable for initiating a radical polymerization; and
wherein the initiator of component (iii) comprises a peroxy initiator or AIBN.

15. The method of claim 11, wherein:
component (a) makes up 0.1 to 35 percent by weight of the star polymer;
component (b) makes up 0.9 to 35 percent by weight of the star polymer;
component (i) makes up 30 to 99 percent by weight of the star polymer

16. A method of lubricating a mechanical device comprising supplying to the mechanical device a lubricating composition of claim 6, wherein the mechanical device is an internal combustion engine, a hydraulic device, a manual or automatic transmission, an industrial gear, an automotive gear (or axle), or a farm tractor.

17. A method for preparing a star polymer, having a core portion and three or more arms, comprising
(a) polymerizing at least one alkyl methacrylate in the presence of a controlled free radical chain transfer agent to prepare polymer chains with a reactive end group, which polymer chains are precursors that will form the arms of said star polymer; and thereafter
(b) reacting the product of step (a) with
(i) at least one multifunctional methacrylate monomer or multifunctional acrylate monomer; provided that if the multifunctional monomer is a multifunctional methacrylate monomer, then the product is additionally reacted with
(ii) at least one alkyl acrylate monomer;
whereby the reaction of step (b) provides a star polymer comprising a core bonded to a multiplicity of arms, wherein the core comprises a crosslinked network of polymers derived from monomers (i) and, when present, (ii).

18. A star polymer prepared or preparable by the process of claim 17.

19. A star polymer, having a core portion and three or more arms, wherein
(a) the arms comprise a polymer comprising at least one alkyl methacrylate monomer and
(b) the core comprises a crosslinked polymer portion comprising
(i) at least one multifunctional methacrylate monomer and
(ii) at least one alkyl acrylate monomer.

20. A lubricating composition comprising an oil of lubricating viscosity and about 0.1 to about 15 weight percent of the star polymer of claim 19.

## Patentansprüche

1. Sternpolymer, wobei das Sternpolymer einen an mindestens drei Arme gebundenen Kern umfasst; wobei der Kern des Sternpolymers ein vernetztes Netzwerk von Polymeren umfasst, die sich von einer Mischung von Monomeren, umfassend:
(a) ein oder mehrere multifunktionelle Monomere und
(b) ein oder mehrere monofunktionelle Monomere, ableiten; und
wobei die Arme des Sternpolymers sich von einer Polymermischung ableiten, die aus (i) einem oder mehreren monofunktionellen Monomeren hergestellte Polymerarm-Vorläufer umfasst, wobei die Vorläufer mindestens eine reaktive Endgruppe enthalten.

2. Sternpolymer nach Anspruch 1, wobei die Arme des Sternpolymers Polymere umfassen, die sich von einer Mischung von (i) einem oder mehreren monofunktionellen Monomeren, (ii) einem Kettenübertragungsmittel und (iii) einem Initiator ableiten.

3. Sternpolymer nach Anspruch 1, wobei die multifunktionellen Monomere von Komponente (a) ein Alkylenglykoldimethacrylat, ein Trialkylolalkantrimethacrylat, ein Dialkandioldimethacrylat oder Kombinationen davon umfassen, wobei die Alkyl-, Alkylol-, Alkylen- und Alkangruppen jeweils unabhängig 1 bis 20 Kohlenstoffatome enthalten; und
wobei die monofunktionellen Monomere von Komponente (b) Alkylmethacrylat-Monomer umfassen, wobei die Alkylgruppe 1 bis 20 Kohlenstoffatome enthält.

4. Zusammensetzung nach Anspruch 2, wobei die monofunktionellen Monomere von Komponente (i) Alkylmethacrylat-Monomer umfassen, wobei die Alkylgruppe 1 bis 20 Kohlenstoffatome enthält; und wobei das Kettenübertragungsmittel von Komponente (ii) ein RAFT-Kettenübertragungsmittel mit mindestens einer Gruppe, die zur Bildung einer zur Initiierung einer Radikalpolymerisation geeigneten Radikalspezies befähigt ist, umfasst; und
wobei der Initiator von Komponente (iii) einen Peroxid-Initiator oder AIBN umfasst.

5. Zusammensetzung nach Anspruch 1, wobei:
Komponente (a) 0,1 bis 35 Gewichtsprozent des Sternpolymers ausmacht;
Komponente (b) 0,9 bis 35 Gewichtsprozent des Sternpolymers ausmacht;
Komponente (i) 30 bis 99 Gewichtsprozent des Sternpolymers ausmacht.

6. Schmiermittelzusammensetzung, umfassend ein Öl mit Schmierviskosität und ein Sternpolymer, wobei das Sternpolymer einen an mindestens drei Arme gebundenen Kern umfasst;
wobei der Kern des Sternpolymers ein vernetztes Netzwerk von Polymeren umfasst, die sich von einer Mischung von Monomeren, umfassend:
(a) ein oder mehrere multifunktionelle Monomere und
(b) ein oder mehrere monofunktionelle Monomere, ableiten;
wobei die Arme des Sternpolymers sich von einer Polymermischung ableiten, die aus (i) einem oder mehreren monofunktionellen Monomeren hergestellte Polymerarm-Vorläufer umfasst, wobei die Vorläufer mindestens eine reaktive Endgruppe enthalten.

7. Sternpolymer nach Anspruch 1, wobei die Arme des Sternpolymers Polymere umfassen, die sich von einer Mischung von (i) einem oder mehreren monofunktionellen Monomeren, (ii) einem Kettenübertragungsmittel und (iii) einem Initiator ableiten.

8. Zusammensetzung nach Anspruch 6, wobei die multifunktionellen Monomere von Komponente (a) ein Alkylenglykoldimethacrylat, ein Trialkylolalkantrimethacrylat, ein Dialkandioldimethacrylat oder Kombinationen davon umfassen, wobei die Alkyl-, Alkylol-, Alkylen- und Alkangruppen jeweils unabhängig 1 bis 20 Kohlenstoffatome enthalten; und
wobei die monofunktionellen Monomere von Komponente (b) Alkylmethacrylat-Monomer umfassen, wobei die Alkylgruppe 1 bis 20 Kohlenstoffatome enthält.

9. Zusammensetzung nach Anspruch 7, wobei die monofunktionellen Monomere von Komponente (i) Alkylmethacrylat-Monomer umfassen, wobei die Alkylgruppe 1 bis 20 Kohlenstoffatome enthält; wobei das Kettenübertragungsmittel von Komponente (ii) ein Trithiocarbonat mit mindestens einer Gruppe, die zur Bildung einer zur Initiierung einer Radikalpolymerisation geeigneten Radikalspezies befähigt ist, umfasst; und
wobei der Initiator von Komponente (iii) einen Peroxid-Initiator oder AIBN umfasst.

10. Zusammensetzung nach Anspruch 6, wobei:
das Öl mit Schmierviskosität 1 bis 99 Gewichtsprozent der Schmiermittelzusammensetzung ausmacht und das Sternpolymer 99 bis 1 Gewichtsprozent der Schmiermittelzusammensetzung ausmacht, wobei
Komponente (a) 0,1 bis 35 Gewichtsprozent des Sternpolymers ausmacht;
Komponente (b) 0,9 bis 35 Gewichtsprozent des Sternpolymers ausmacht;
Komponente (i) 30 bis 99 Gewichtsprozent des Sternpolymers ausmacht.

11. Verfahren zur Herstellung eines Sternpolymers, das folgende Schritte umfasst:
I. Umsetzen von (i) einem oder mehreren monofunktionellen Monomeren bei einer Temperatur von 45 °C oder höher;
wobei die Umsetzung von Schritt I Polymere ergibt, bei denen es sich um Vorläufer handelt, die die Arme des Polymerssterns bilden werden, wobei die Vorläufer mindestens eine reaktive Endgruppe enthalten; und
II. Umsetzen von
(a) einem oder mehreren multifunktionellen Monomeren;
(b) einem oder mehreren monofunktionellen Monomeren; und
(c) dem Reaktionsprodukt aus Schritt I
bei einer Temperatur von 45 °C oder höher;
wobei die Umsetzung von Schritt II ein Sternpolymer ergibt, das einen an mindestens drei Arme gebundenen Kern umfasst, wobei der Kern des Sternpolymers ein vernetztes Netzwerk von Polymeren umfasst, die sich von einer Mischung von Monomeren (a) und (b) ableiten.

12. Verfahren nach Anspruch 11, bei dem Schritt I das Umsetzen von
(i) einem oder mehreren monofunktionellen Monomeren;
(ii) einem Kettenübertragungsmittel; und
(iii) einem Initiator
bei einer Temperatur von 45 °C oder höher umfasst.

13. Verfahren nach Anspruch 11, wobei die multifunktionellen Monomere von Komponente (a) ein Alkylenglykoldimethacrylat, ein Trialkylolalkantrimethacrylat, ein Dialkandioldimethacrylat oder Kombinationen davon umfassen, wobei die Alkyl-, Alkylol-, Alkylen- und Alkangruppen jeweils unabhängig 1 bis 20 Kohlenstoffatome enthalten; und
wobei die monofunktionellen Monomere von Komponente (b) Alkylmethacrylat-Monomer umfassen, wobei die Alkylgruppe 1 bis 20 Kohlenstoffatome enthält.

14. Verfahren nach Anspruch 12, bei dem die monofunktionellen Monomere von Komponente (i) Alkylmethacrylat-Monomer umfassen, wobei die Alkylgruppe 1 bis 20 Kohlenstoffatome enthält; wobei das Kettenübertragungsmittel von Komponente (ii) ein Trithiocarbonat mit mindestens einer Gruppe, die zur Bildung einer zur Initiierung einer Radikalpolymerisation geeigneten Radikalspezies befähigt ist, umfasst; und
wobei der Initiator von Komponente (iii) einen Peroxid-Initiator oder AIBN umfasst.

15. Verfahren nach Anspruch 11, wobei:
Komponente (a) 0,1 bis 35 Gewichtsprozent des Sternpolymers ausmacht;
Komponente (b) 0,9 bis 35 Gewichtsprozent des Sternpolymers ausmacht;
Komponente (i) 30 bis 99 Gewichtsprozent des Sternpolymers ausmacht.

16. Verfahren zum Schmieren einer mechanischen Vorrichtung, bei dem man der mechanischen Vorrichtung eine Schmiermittelzusammensetzung nach Anspruch 6 zuführt, wobei es sich bei der mechanischen Vorrichtung um einen Verbrennungsmotor, eine hydraulische Vorrichtung, ein manuelles oder automatisches Schaltgetriebe, ein technisches Getriebe, ein Autogetriebe (oder eine Autoachse) oder einen Ackerschlepper handelt.

17. Verfahren zur Herstellung eines Sternpolymers mit einem Kernteil und drei oder mehr Armen, das Folgendes umfasst:
(a) Polymerisieren mindestens eines Alkylmethacrylats in Gegenwart eines Mittels zur kontrollierten Radikalkettenübertragung zur Herstellung von Polymerketten mit einer reaktiven Endgruppe, wobei es sich bei den Polymerketten um Vorläufer handelt, die die Arme des Sternpolymers bilden werden; und danach
(b) Umsetzen des Produkts aus Schritt (a) mit
(i) mindestens einem multifunktionellen Methacrylat-Monomer oder multifunktionellen Acrylat-Monomer; mit der Maßgabe, dass dann, wenn es sich bei dem multifunktionellen Monomer um ein multifunktionelles Methacrylat-Monomer handelt, das Produkt zusätzlich mit
(ii) mindestens einem Alkylacrylat-Monomer umgesetzt wird;
wodurch die Umsetzung von Schritt (b) ein Sternpolymer, das einen an mehrere Arme gebundenen Kern umfasst, ergibt, wobei der Kern ein vernetztes Netzwerk von Polymeren umfasst, die sich von Monomeren (i) und, sofern vorhanden, (ii) ableiten.

18. Sternpolymer, hergestellt oder herstellbar durch das Verfahren nach Anspruch 17.

19. Sternpolymer mit einem Kernteil und drei oder mehr Armen, wobei
(a) die Arme ein Polymer, das mindestens ein Alkylmethacrylat-Monomer umfasst, umfassen und
(b) der Kern einen vernetzten Polymerteil umfasst, der
(i) mindestens ein multifunktionelles Methacrylat-Monomer und
(ii) mindestens ein Alkylacrylat-Monomer umfasst.

20. Schmiermittelzusammensetzung, umfassend ein Öl mit Schmierviskosität und etwa 0,1 bis etwa 15 Gewichtsprozent des Sternpolymers nach Anspruch 19.

## Revendications

1. Polymère en étoile, ledit polymère en étoile comprenant un noyau lié à au moins trois ramifications ;
le noyau du polymère en étoile comprenant un réseau réticulé de polymères issus d'un mélange de monomères comprenant :
(a) un ou plusieurs monomères multi-fonctionnels ; et
(b) un ou plusieurs monomères mono-fonctionnels ; et
les ramifications du polymère en étoile étant issues d'un mélange de polymères comprenant des précurseurs de ramification polymère préparés à partir (i) d'un ou plusieurs monomères mono-fonctionnels, lesdits précurseurs comportant au moins un groupe terminal réactif.

2. Polymère en étoile selon la revendication 1, les ramifications du polymère en étoile comprenant des polymères issus d'un mélange : (i) d'un ou plusieurs monomères mono-fonctionnels ; (ii) d'un agent de transfert de chaîne ; et (iii) d'un amorceur.

3. Composition selon la revendication 1, les monomères multi-fonctionnels du composant (a) comprenant un diméthacrylate d'alkylène glycol, un triméthacrylate de trialkylolalcane, un diméthacrylate de di-alcane diol ou des combinaisons correspondantes, les groupes alkyle, alkylol, alkylène et alcane contenant chacun indépendamment 1 jusqu'à 20 atomes de carbone ; et
les monomères mono-fonctionnels du composant (b) comprenant un monomère du type méthacrylate d'alkyle, les groupes alkyle contenant 1 jusqu'à 20 atomes de carbone.

4. Composition selon la revendication 2, les monomères mono-fonctionnels du composant (i) comprenant un monomère du type méthacrylate d'alkyle, les groupes alkyle contenant 1 jusqu'à 20 atomes de carbone ; et
l'agent de transfert de chaîne du composant (ii) comprenant un agent de transfert de chaîne RAFT (transfert de chaîne réversible par addition-fragmentation) comportant au moins un groupe en mesure de former une espèce radicalaire appropriée pour l'amorçage d'une réaction de polymérisation radicalaire ; et
l'amorceur du composant (iii) comprenant un amorceur du type peroxy ou l'AIBN (azobis(isobutyronitrile)).

5. Composition selon la revendication 1,
le composant (a) représentant 0,1 jusqu'à 35 pour cent en poids du polymère en étoile ;
le composant (b) représentant 0,9 jusqu'à 35 pour cent en poids du polymère en étoile ;
le composant (i) représentant 30 jusqu'à 99 pour cent en poids du polymère en étoile.

6. Composition lubrifiante comprenant une huile de viscosité lubrifiante et un polymère en étoile, ledit polymère en étoile comprenant un noyau lié à au moins trois ramifications ;
le noyau du polymère en étoile comprenant un réseau réticulé de polymères issus d'un mélange de monomères comprenant :
(a) un ou plusieurs monomères multi-fonctionnels ; et
(b) un ou plusieurs monomères mono-fonctionnels ; et
les ramifications du polymère en étoile étant issues d'un mélange de polymères comprenant des précurseurs de ramification polymère préparés à partir (i) d'un ou plusieurs monomères mono-fonctionnels, lesdits précurseurs comportant au moins un groupe terminal réactif.

7. Polymère en étoile selon la revendication 1, les ramifications du polymère en étoile comprenant des polymères issus d'un mélange : (i) d'un ou plusieurs monomères mono-fonctionnels ; (ii) d'un agent de transfert de chaîne ; et (iii) d'un amorceur.

8. Composition selon la revendication 6, les monomères multi-fonctionnels du composant (a) comprenant un diméthacrylate d'alkylène glycol, un triméthacrylate de trialkylolalcane, un diméthacrylate de di-alcane diol ou des combinaisons correspondantes, les groupes alkyle, alkylol, alkylène et alcane contenant chacun indépendamment 1 jusqu'à 20 atomes de carbone ; et
les monomères mono-fonctionnels du composant (b) comprenant un monomère du type méthacrylate d'alkyle, les groupes alkyle contenant 1 jusqu'à 20 atomes de carbone.

9. Composition selon la revendication 7, les monomères mono-fonctionnels du composant (i) comprenant un monomère du type méthacrylate d'alkyle, les groupes alkyle contenant 1 jusqu'à 20 atomes de carbone ;
l'agent de transfert de chaîne du composant (ii) comprenant un trithiocarbonate comportant au moins un groupe en mesure de former une espèce radicalaire appropriée pour l'amorçage d'une réaction de polymérisation radicalaire ; et l'amorceur du composant (iii) comprenant un amorceur du type peroxy ou l'AIBN (azobis(isobutyronitrile)).

10. Composition selon la revendication 6,
l'huile de viscosité lubrifiante représentant 1 jusqu'à 99 pour cent en poids de la composition lubrifiante et le polymère en étoile représentant 99 jusqu'à 1 pour cent en poids de la composition lubrifiante ,
le composant (a) représentant 0,1 jusqu'à 35 pour cent en poids du polymère en étoile ;
le composant (b) représentant 0,9 jusqu'à 35 pour cent en poids du polymère en étoile ;
le composant (i) représentant 30 jusqu'à 99 pour cent en poids du polymère en étoile.

11. Procédé de préparation d'un polymère en étoile comprenant les étapes de
I. mise en réaction à une température de 45°C ou plus (i) d'un ou plusieurs monomères mono-fonctionnels ;
la réaction de l'étape I produisant des polymères étant des précurseurs de formation des ramifications dudit polymère en étoile, lesdits précurseurs comportant au moins un groupe terminal réactif ; et
II. mise en réaction à une température de 45°C ou plus :
(a) d'un ou plusieurs monomères multi-fonctionnels ;
(b) d'un ou plusieurs monomères mono-fonctionnels ; et
(c) du produit de réaction de l'étape I ;
la réaction de l'étape II produisant un polymère en étoile comprenant un noyau lié à au moins trois ramifications, le noyau du polymère en étoile comprenant un réseau réticulé de polymères issus d'un mélange de monomères (a) et (b).

12. Procédé selon la revendication 11, l'étape I comprenant la mise en réaction à une température de 45°C ou plus :
(i) d'un ou plusieurs monomères mono-fonctionnels ;
(ii) d'un agent de transfert de chaîne ;
(iii) d'un amorceur.

13. Procédé selon la revendication 11, les monomères multi-fonctionnels du composant (a) comprenant un diméthacrylate d'alkylène glycol, un triméthacrylate de trialkylolalcane, un diméthacrylate de di-alcane diol ou des combinaisons correspondantes, les groupes alkyle, alkylol, alkylène et alcane contenant chacun indépendamment 1 jusqu'à 20 atomes de carbone ; et
les monomères mono-fonctionnels du composant (b) comprenant un monomère du type méthacrylate d'alkyle, les groupes alkyle contenant 1 jusqu'à 20 atomes de carbone.

14. Procédé selon la revendication 12, les monomères mono-fonctionnels du composant (i) comprenant un monomère du type méthacrylate d'alkyle, les groupes alkyle contenant 1 jusqu'à 20 atomes de carbone ;
l'agent de transfert de chaîne du composant (ii) comprenant un trithiocarbonate comportant au moins un groupe en mesure de former une espèce radicalaire appropriée pour l'amorçage d'une réaction de polymérisation radicalaire ; et l'amorceur du composant (iii) comprenant un amorceur du type peroxy ou l'AIBN.

15. Procédé de la revendication 11,
le composant (a) représentant 0,1 jusqu'à 35 pour cent en poids du polymère en étoile ;
le composant (b) représentant 0,9 jusqu'à 35 pour cent en poids du polymère en étoile ;
le composant (i) représentant 30 jusqu'à 99 pour cent en poids du polymère en étoile.

16. Procédé de lubrification d'un dispositif mécanique comprenant l'alimentation d'une composition lubrifiante selon la revendication 6 au dispositif mécanique, le dispositif mécanique étant un moteur à combustion interne, un dispositif hydraulique, une transmission manuelle ou automatique, un engrenage industriel, un engrenage automobile (ou un essieu) ou un tracteur agricole.

17. Procédé de préparation d'un polymère en étoile ayant une partie noyau et trois ramifications ou plus, comprenant
(a) la polymérisation d'au moins un méthacrylate d'alkyle en présence d'un agent de transfert de chaîne par voie radicalaire libre régulée afin de préparer des chaînes polymères portant un groupe terminal réactif,
les chaînes polymères étant des précurseurs de formation des ramifications dudit polymère en étoile ; et ultérieurement
(b) la mise en réaction du produit de l'étape (a) avec
(i) au moins un monomère du type méthacrylate multi-fonctionnel ou un monomère du type acrylate multi-fonctionnel ; à la condition que dans le cas où le monomère multi-fonctionnel est un monomère du type méthacrylate multi-fonctionnel, le produit est de plus mis à réagir avec
(ii) au moins un monomère du type acrylate d'alkyle ;
la réaction de l'étape (b) fournissant un polymère en étoile comprenant un noyau lié à une multitude de ramifications, le noyau comprenant un réseau réticulé de polymères issus des monomères (i) et, le cas échéant, des monomères (ii).

18. Polymère en étoile préparé ou pouvant être préparé suivant le procédé selon la revendication 17.

19. Polymère en étoile ayant une partie noyau et trois ramifications ou plus,
(a) les ramifications comprenant un polymère comprenant au moins un monomère du type méthacrylate d'alkyle et
(b) le noyau comprenant une partie de polymère réticulée comprenant
(i) au moins un monomère du type méthacrylate multi-fonctionnel et
(ii) au moins un monomère du type acrylate d'alkyle.

20. Composition lubrifiante comprenant une huile de viscosité lubrifiante et environ 0,1 jusqu'à environ 15 pour cent en poids du polymère en étoile selon la revendication 19.
